# EUROPEAN PATENT APPLICATION

(11) **EP 4 135 433 A1**
(43) Date of publication of application: **15.02.2023**
(21) Application number: 20931727.0
(22) Date of filing: 24.04.2020
(51) Int. Cl.: H04W 72/02, H04W 72/04

(54) **METHOD FOR DETERMINING SIDELINK RESOURCE, AND COMMUNICATION APPARATUS**

(71) Applicant: Huawei Technologies Co., Ltd., Longgang Shenzhen, Guangdong 518129 (CN)
(72) Inventor: XIANG, Zhengzheng, Shenzhen, Guangdong 518129 (CN); DONG, Lei, Shenzhen, Guangdong 518129 (CN); SU, Hongjia, Shenzhen, Guangdong 518129 (CN); GUO, Wenting, Shenzhen, Guangdong 518129 (CN); LU, Lei, Shenzhen, Guangdong 518129 (CN)
(74) Representative: Thun, Clemens
(86) International application number: PCT/CN2020/086748
(87) International publication number: WO 2021/212483

(57) **Abstract**

This application provides a sidelink resource determining method and a communication apparatus, which may be applied to D2D or Internet of Vehicles, for example, V2X or LTE-V Specifically, a first terminal device determines a first sidelink candidate resource through monitoring. The first terminal device receives at least one piece of resource indication information from a second terminal device, where each piece of resource indication information indicates one second sidelink candidate resource obtained by the second terminal device through monitoring. The first terminal device determines a sidelink sending resource based on the first sidelink candidate resource and based on at least one second sidelink candidate resource indicated by the at least one piece of resource indication information. The first terminal device sends sidelink control information and data on the sidelink sending resource.

## Description

### TECHNICAL FIELD

This application relates to the communications field, and more specifically, to a sidelink resource determining method and a communication apparatus.

### BACKGROUND

There are two modes for determining a transmission resource in a vehicle-to-everything (vehicle to everything, V2X) network. One is a mode (namely, mode 1) in which a network device performs scheduling, and the other is a mode (namely, mode 2) in which a terminal device autonomously selects a resource. In mode 2, a transmit end selects a resource based only on a monitoring result of the transmit end. Consequently, the resource selected by the transmit end may not be suitable for a receive end, and the receive end may fail to correctly receive sidelink information sent by the transmit end.

### SUMMARY

This application provides a sidelink resource determining method and a communication apparatus. A transmit-end terminal device selects a resource based on a monitoring result of the transmit-end terminal device and a resource reported by a receive-end terminal device and/or a terminal device other than the receive-end terminal device. This helps select a suitable resource for sidelink transmission.

According to a first aspect, a sidelink resource determining method is provided. The method includes: A first terminal device determines a first sidelink candidate resource through monitoring. The first terminal device receives at least one piece of resource indication information from a second terminal device, where each piece of resource indication information indicates one second sidelink candidate resource obtained by the second terminal device through monitoring. The first terminal device determines a sidelink sending resource based on the first sidelink candidate resource and based on at least one second sidelink candidate resource indicated by the at least one piece of resource indication information. The first terminal device sends sidelink control information (sidelink control information, SCI) and data on the sidelink sending resource.

The first sidelink candidate resource is a resource set, and includes one or more sidelink resources. The second sidelink candidate resource is also a resource set, and includes one or more sidelink resources. The sidelink resource is a resource for sidelink communication. Each sidelink resource occupies one slot in time domain, and occupies one or more sub-channels in frequency domain. However, this is not limited in this application. For example, one sidelink resource may occupy one or more slots, one or more subframes, one or more symbols, or the like in time domain.

The second terminal device may be a receive-end terminal device to which the first terminal device is to send current data, or may be a terminal device other than the receive-end terminal device. Alternatively, the second terminal device may include a receive-end terminal device and a terminal device other than the receive-end terminal device.

Optionally, the resource indication information may be carried by SCI, a media access control control element (media access control control element, MAC CE), or radio resource control (radio resource control, RRC) signaling. Further, the resource indication information may be carried on a physical sidelink control channel (physical sidelink control channel, PSCCH) or a physical sidelink shared channel (physical sidelink shared channel, PSSCH).

According to the sidelink resource determining method provided in this application, when the first terminal device needs to send data, the first terminal device may determine the sidelink sending resource based on the first sidelink candidate resource determined through monitoring, and based on the at least one second sidelink candidate resource that is determined by the second terminal device based on monitoring and that is reported by the second terminal device for one or more times. The first terminal device fully considers a monitoring result of the second terminal device. Therefore, this helps avoid a problem of inappropriate resource selection, to improve sidelink transmission reliability.

With reference to the first aspect, in some implementations of the first aspect, the sidelink sending resource is a resource that is in the at least one second sidelink candidate resource and that overlaps the first sidelink candidate resource.

Based on this solution, if there is an overlapping part between the at least one second sidelink candidate resource and the first sidelink candidate resource, the sidelink sending resource may be determined from an overlapping resource between the at least one second sidelink candidate resource and the first sidelink candidate resource. There is a high probability that the sidelink sending resource selected based on this solution is not used by another terminal device, so that the sidelink transmission reliability may be improved when sidelink transmission is performed based on the sidelink sending resource.

Optionally, if there is no overlapping part between the at least one second sidelink candidate resource and the first sidelink candidate resource, the sidelink sending resource may be determined from the first sidelink candidate resource or the at least one second sidelink candidate resource.

With reference to the first aspect, in some implementations of the first aspect, the resource indication information indicates a start location of the second sidelink candidate resource in frequency domain and one or more of the following: an index of a slot corresponding to the second sidelink candidate resource; an offset of the slot corresponding to the second sidelink candidate resource with respect to a time reference point; and a reservation periodicity or a reservation time interval of the second sidelink candidate resource.

Optionally, the time reference point may be a moment at which the first terminal device receives the resource indication information (for example, a slot, a start point of a slot, or a start location of a slot in/at which the first terminal device receives the resource indication information). Alternatively, the time reference point may be configured by a network device, or may be preconfigured, or may be configured by a terminal device other than the first terminal device and the second terminal device.

With reference to the first aspect, in some implementations of the first aspect, an interval between a time point at which the first terminal device receives the at least one piece of resource indication information and a first time point is less than a preset time interval. Alternatively, the at least one piece of resource indication information is resource indication information that is most recently received by the first terminal device for one or more times prior to the first time point. The first time point is a time point at which the first terminal device determines the first sidelink candidate resource or a time point at which the first terminal device determines the sidelink sending resource.

Based on this solution, the first terminal device considers only a second sidelink candidate resource indicated by resource indication information reported within a specific time range, to help select a more suitable sidelink sending resource.

With reference to the first aspect, in some implementations of the first aspect, that the first terminal device sends sidelink control information and data on the sidelink sending resource includes: The first terminal device sends the sidelink control information and the data to the second terminal device on the sidelink sending resource.

According to a second aspect, a sidelink resource determining method is provided. The method includes: A first terminal device determines a first sidelink candidate resource through monitoring. The first terminal device receives at least one piece of resource indication information from a second terminal device on at least one first resource, where each piece of resource indication information indicates a reservation periodicity or a reservation time interval of a corresponding first resource. The first terminal device determines at least one second sidelink candidate resource based on the at least one piece of resource indication information and the at least one first resource. The first terminal device determines a sidelink sending resource based on the first sidelink candidate resource and based on the at least one second sidelink candidate resource. The first terminal device sends sidelink control information and data on the sidelink sending resource.

The first sidelink candidate resource is a resource set, and includes one or more sidelink resources. The sidelink resource is a resource for sidelink communication. Each sidelink resource occupies one slot in time domain, and occupies one or more sub-channels in frequency domain. However, this is not limited in this application. For example, one sidelink resource may occupy one or more slots, one or more subframes, one or more symbols, or the like in time domain.

The second terminal device may be a receive-end terminal device to which the first terminal device is to send current data, or may be a terminal device other than the receive-end terminal device. Alternatively, the second terminal device may include a receive-end terminal device and a terminal device other than the receive-end terminal device.

Optionally, the resource indication information may be included in SCI, and the SCI may be carried on a PSCCH or a PSSCH.

According to the sidelink resource determining method provided in this application, when the first terminal device needs to send data, the first terminal device may determine the sidelink sending resource based on the first sidelink candidate resource determined through monitoring and a reservation periodicity or a reservation time interval of a reserved resource that is reported by the second terminal device for one or more times. The first terminal device fully considers the resource reported by the second terminal device. Therefore, this helps avoid a problem of inappropriate resource selection, to improve sidelink transmission reliability.

With reference to the second aspect, in some implementations of the second aspect, the resource indication information further indicates that the first resource may be used by the first terminal device to perform sidelink sending.

With reference to the second aspect, in some implementations of the second aspect, the sidelink sending resource is a resource that is in the at least one second sidelink candidate resource and that overlaps the first sidelink candidate resource.

Based on this solution, if there is an overlapping part between the at least one second sidelink candidate resource and the first sidelink candidate resource, the sidelink sending resource may be determined from an overlapping resource between the at least one second sidelink candidate resource and the first sidelink candidate resource. There is a high probability that the sidelink sending resource selected based on this solution is not used by another terminal device, so that the sidelink transmission reliability may be improved when sidelink transmission is performed based on the sidelink sending resource.

Optionally, if there is no overlapping part between the at least one second sidelink candidate resource and the first sidelink candidate resource, the sidelink sending resource may be determined from the first sidelink candidate resource or the at least one second sidelink candidate resource.

With reference to the second aspect, in some implementations of the second aspect, a time interval between a time point at which the first terminal device receives the at least one piece of resource indication information and a first time point is less than a preset time interval. Alternatively, the at least one piece of resource indication information is resource indication information that is most recently received by the first terminal device for one or more times prior to the first time point. The first time point is a time point at which the first terminal device determines the first sidelink candidate resource or a time point at which the first terminal device determines the sidelink sending resource.

Based on this solution, the first terminal device considers only a second sidelink candidate resource indicated by resource indication information reported within a specific time range, to help select a more suitable sidelink sending resource.

With reference to the second aspect, in some implementations of the second aspect, that the first terminal device sends sidelink control information and data on the sidelink sending resource includes: The first terminal device sends the sidelink control information and the data to the second terminal device on the sidelink sending resource.

According to a third aspect, a sidelink resource determining method is provided. The method includes: A second terminal device determines a second sidelink candidate resource through monitoring. The second terminal device sends resource indication information to a first terminal device, where the resource indication information indicates the second sidelink candidate resource.

The second sidelink candidate resource is a resource set, and includes one or more sidelink resources. The sidelink resource is a resource for sidelink communication. Each sidelink resource occupies one slot in time domain, and occupies one or more sub-channels in frequency domain. However, this is not limited in this application. For example, one sidelink resource may occupy one or more slots, one or more subframes, one or more symbols, or the like in time domain.

The second terminal device may be a receive-end terminal device to which the first terminal device is to send current data, or may be a terminal device other than the receive-end terminal device. Alternatively, the second terminal device may include a receive-end terminal device and a terminal device other than the receive-end terminal device.

Optionally, the resource indication information may be carried by SCI, a MAC CE, or RRC signaling. Further, the resource indication information may be carried on a PSCCH or a PSSCH.

According to the sidelink resource determining method provided in this application, the second terminal device reports the determined second sidelink candidate resource to the first terminal device, so that the first terminal device may determine a sidelink sending resource based on a first sidelink candidate resource that is determined by the first terminal device through monitoring and the second sidelink candidate resource. In this way, the first terminal device may fully consider a monitoring result of the second terminal device. Therefore, this helps avoid a problem of inappropriate resource selection, to improve sidelink transmission reliability.

With reference to the third aspect, in some implementations of the third aspect, the method may further include: The second terminal device receives sidelink control information and data from the first terminal device on the sidelink sending resource, where the sidelink sending resource is determined by the first terminal device based on the second sidelink candidate resource.

With reference to the third aspect, in some implementations of the third aspect, the resource indication information indicates start location information of the second sidelink candidate resource in frequency domain and one or more of the following: an index of a slot corresponding to the second sidelink candidate resource; an offset of the slot corresponding to the second sidelink candidate resource with respect to a time reference point; and a reservation periodicity or a reservation time interval of the second sidelink candidate resource.

According to a fourth aspect, a sidelink resource determining method is provided. The method includes: A second terminal device generates resource indication information. The second terminal device sends the resource indication information to a first terminal device on a first resource, where the resource indication information indicates a reservation periodicity or a reservation time interval of the first resource.

The first resource is a sidelink resource, and the sidelink resource is a resource for sidelink communication. The first resource occupies one slot in time domain, and occupies one or more sub-channels in frequency domain. However, this is not limited in this application. For example, the first resource may occupy one or more slots, one or more subframes, one or more symbols, or the like in time domain.

The second terminal device may be a receive-end terminal device to which the first terminal device is to send current data, or may be a terminal device other than the receive-end terminal device. Alternatively, the second terminal device may include a receive-end terminal device and a terminal device other than the receive-end terminal device.

Optionally, the resource indication information may be included in SCI, and the SCI may be carried on a PSCCH or a PSSCH.

According to the sidelink resource determining method provided in this application, the second terminal device reports the reservation periodicity or the reservation time interval of the first resource to the first terminal device, so that the first terminal device may determine, based on the first resource and the reservation periodicity or the reservation time interval of the first resource, a resource reserved by the second terminal device. Therefore, the first terminal device may determine, with reference to the resource reserved by the second terminal device, a sidelink sending resource. The first terminal device fully considers the resource reserved by the second terminal device. Therefore, this helps avoid a problem of inappropriate resource selection, to improve sidelink transmission reliability.

With reference to the fourth aspect, in some implementations of the fourth aspect, the method may further include: The second terminal device receives sidelink control information and data from the first terminal device on the sidelink sending resource, where the sidelink sending resource is determined by the first terminal device based on the first resource and the resource indication information.

With reference to the fourth aspect, in some implementations of the fourth aspect, the resource indication information further indicates that the first resource is used by the first terminal device to perform sidelink sending.

Optionally, the resource indication information may not indicate that the first resource is used by the first terminal device to perform sidelink sending, but may specify in advance that a resource carrying the resource indication information is used by the first terminal device to perform sidelink sending.

It should be noted that the method described in the foregoing aspects may be performed by an entire terminal device; or a part or a component that has a function of implementing the foregoing method, for example, a part or a component of the terminal device; or a communication chip or a chip system, for example, a communication chip that can be applied to the terminal device.

According to a fifth aspect, a communication apparatus is provided. The communication apparatus includes a processing unit and a transceiver unit. The processing unit is configured to determine a first sidelink candidate resource through monitoring. The transceiver unit is configured to receive at least one piece of resource indication information from a second terminal device, where each piece of resource indication information indicates one second sidelink candidate resource obtained by the second terminal device through monitoring. The processing unit is further configured to determine a sidelink sending resource based on the first sidelink candidate resource and based on at least one second sidelink candidate resource indicated by the at least one piece of resource indication information. The transceiver unit is further configured to send sidelink control information and data on the sidelink sending resource.

With reference to the fifth aspect, in some implementations of the fifth aspect, the sidelink sending resource is a resource that is in the at least one second sidelink candidate resource and that overlaps the first sidelink candidate resource.

With reference to the fifth aspect, in some implementations of the fifth aspect, the resource indication information indicates a start location of the second sidelink candidate resource in frequency domain and one or more of the following: an index of a slot corresponding to the second sidelink candidate resource; an offset of the slot corresponding to the second sidelink candidate resource with respect to a time reference point; and a reservation periodicity or a reservation time interval of the second sidelink candidate resource.

With reference to the fifth aspect, in some implementations of the fifth aspect, an interval between a time point at which the transceiver unit receives the at least one piece of resource indication information and a first time point is less than a preset time interval. Alternatively, the at least one piece of resource indication information is resource indication information that is most recently received by the transceiver unit for one or more times prior to the first time point. The first time point is a time point at which the processing unit determines the first sidelink candidate resource or a time point at which the processing unit determines the sidelink sending resource.

With reference to the fifth aspect, in some implementations of the fifth aspect, the transceiver unit is specifically configured to: send the sidelink control information and the data to the second terminal device on the sidelink sending resource.

According to a sixth aspect, a communication apparatus is provided. The communication apparatus includes a processing unit and a transceiver unit. The processing unit is configured to determine a first sidelink candidate resource through monitoring. The transceiver unit is configured to receive at least one piece of resource indication information from a second terminal device on at least one first resource, where each piece of resource indication information indicates a reservation periodicity or a reservation time interval of a corresponding first resource. The processing unit is further configured to determine at least one second sidelink candidate resource based on the at least one piece of resource indication information and the at least one first resource. The processing unit is further configured to determine a sidelink sending resource based on the first sidelink candidate resource and based on the at least one second sidelink candidate resource. The transceiver unit is further configured to send sidelink control information and data on the sidelink sending resource.

With reference to the sixth aspect, in some implementations of the sixth aspect, the resource indication information further indicates that the first resource may be used by the transceiver unit to perform sidelink sending.

With reference to the sixth aspect, in some implementations of the sixth aspect, the sidelink sending resource is a resource that is in the at least one second sidelink candidate resource and that overlaps the first sidelink candidate resource.

With reference to the sixth aspect, in some implementations of the sixth aspect, a time interval between a time point at which the transceiver unit receives the at least one piece of resource indication information and a first time point is less than a preset time interval. Alternatively, the at least one piece of resource indication information is resource indication information that is most recently received by the transceiver unit for one or more times prior to the first time point. The first time point is a time point at which the processing unit determines the first sidelink candidate resource or a time point at which the processing unit determines the sidelink sending resource.

With reference to the sixth aspect, in some implementations of the sixth aspect, the transceiver unit is specifically configured to: send the sidelink control information and the data to the second terminal device on the sidelink sending resource.

According to a seventh aspect, a communication apparatus is provided. The communication apparatus includes a processing unit and a transceiver unit. The processing unit is configured to determine a second sidelink candidate resource through monitoring. The transceiver unit is configured to send resource indication information to a first terminal device, where the resource indication information indicates the second sidelink candidate resource.

With reference to the seventh aspect, in some implementations of the seventh aspect, the transceiver unit is further configured to: receive sidelink control information and data from the first terminal device on a sidelink sending resource, where the sidelink sending resource is determined by the first terminal device based on the second sidelink candidate resource.

With reference to the seventh aspect, in some implementations of the seventh aspect, the resource indication information indicates start location information of the second sidelink candidate resource in frequency domain and one or more of the following: an index of a slot corresponding to the second sidelink candidate resource; an offset of the slot corresponding to the second sidelink candidate resource with respect to a time reference point; and a reservation periodicity or a reservation time interval of the second sidelink candidate resource.

According to an eighth aspect, a communication apparatus is provided. The communication apparatus includes a processing unit and a transceiver unit. The processing unit is configured to generate resource indication information. The transceiver unit is configured to send the resource indication information to a first terminal device on a first resource, where the resource indication information indicates a reservation periodicity or a reservation time interval of the first resource.

With reference to the eighth aspect, in some implementations of the eighth aspect, the transceiver unit is further configured to: receive sidelink control information and data from the first terminal device on a sidelink sending resource, where the sidelink sending resource is determined by the first terminal device based on the first resource and the resource indication information.

With reference to the eighth aspect, in some implementations of the eighth aspect, the resource indication information further indicates that the first resource is used by the first terminal device to perform sidelink sending.

According to a ninth aspect, a communication apparatus is provided. The communication apparatus includes an input circuit, an output circuit, and a processing circuit. The processing circuit is configured to: receive a signal through the input circuit, and output a signal through the output circuit, to enable the communication apparatus to perform the method according to any one of the first aspect to the fourth aspect or the possible implementations of the first aspect to the fourth aspect.

In a specific implementation process, the communication apparatus may be a chip, the input circuit may be an input interface, the output circuit may be an output interface, and the processing circuit may be a central processing unit (central processing unit, CPU) or the like. The input signal received by the input circuit may be received and input by, for example, but not limited to, a receiver. The signal output by the output circuit may be output to, for example, but is not limited to, a transmitter and transmitted by the transmitter. In addition, the input interface and the output interface may be an integrated input/output interface, and the input/output interface is separately used as the input interface and the output interface at different moments. Specific implementations of the communication apparatus and various circuits or interfaces are not limited in embodiments of this application.

According to a tenth aspect, a communication apparatus is provided. The communication apparatus includes a processor and a memory. The processor is configured to read instructions stored in the memory, to perform the method according to any one of the first aspect to the fourth aspect or the possible implementations of the first aspect to the fourth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into a same chip, or may be separately disposed in different chips. A type of the memory and a manner in which the memory and the processor are disposed are not limited in this embodiment of this application.

Optionally, the communication apparatus may further include a transceiver, and the transceiver may be configured to receive a signal and send a signal.

The communication apparatus in the tenth aspect may be a chip. The processor may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to an eleventh aspect, a computer program product is provided. The computer program product includes a computer program (which may also be referred to as code or instructions). When the computer program is executed, the method according to any one of the first aspect to the fourth aspect or the possible implementations of the first aspect to the fourth aspect is performed.

According to a twelfth aspect, a readable storage medium is provided. The readable storage medium stores a computer program (which may also be referred to as code or instructions). When the computer program or the instructions are executed, the method according to any one of the first aspect to the fourth aspect or the possible implementations of the first aspect to the fourth aspect is performed.

According to a thirteenth aspect, a communication system is provided. The communication system includes the first terminal device in the first aspect and the second terminal device in the second aspect, or includes the first terminal device in the third aspect and the second terminal device in the fourth aspect.

### BRIEF DESCRIPTION OF DRAWINGS

FIG. 1 is a schematic diagram of a scenario to which this application is applicable;
FIG. 2 is a schematic diagram of indicating, by using a bit map, a subframe used for V2X communication;
FIG. 3 is a schematic diagram of an example of a time-frequency resource in a V2X communication resource pool;
FIG. 4 is a schematic flowchart of mode 1 in V2X communication;
FIG. 5 is a schematic diagram of reserving a resource based on a reservation periodicity;
FIG. 6 is a schematic diagram of an example of reserving a resource based on a reservation periodicity;
FIG. 7 is a schematic diagram of another example of reserving a resource based on a reservation periodicity;
FIG. 8 is a schematic diagram of selecting a resource through monitoring by a transmit-end terminal device;
FIG. 9 is a schematic diagram of a scenario in which resource collision may occur;
FIG. 10 is a schematic flowchart of a sidelink resource determining method according to this application;
FIG. 11 is a schematic diagram of reporting, by a receive-end terminal device, a resource for a plurality of times;
FIG. 12A and FIG. 12B are a schematic diagram of selecting a resource by a transmit-end terminal device;
FIG. 13 is a schematic flowchart of another sidelink resource determining method according to this application;
FIG. 14 is a schematic diagram of selecting a resource by a transmit-end terminal device;
FIG. 15 is a schematic diagram of a structure of a communication apparatus according to this application;
FIG. 16 is another schematic diagram of a structure of a communication apparatus according to this application; and
FIG. 17 is a schematic diagram of a terminal device according to this application.

### DESCRIPTION OF EMBODIMENTS

The following describes the technical solutions of this application with reference to the accompanying drawings.

The technical solutions provided in this application may be applied to vehicle-to-everything (vehicle to everything, V2X) communication. For example, the V2X communication may include vehicle-to-vehicle (vehicle to vehicle, V2V) communication, vehicle-to-infrastructure (vehicle to infrastructure, V2I) communication, vehicle-tonetwork (vehicle to Network, V2N) communication, vehicle-to-pedestrian (vehicle to pedestrian, V2P) communication, and the like. The V2X may be LTE V2X or NR V2X, or may be V2X in another communication system that may appear with development of technologies.

It should be understood that the technical solutions provided in this application may be further applied to other scenarios, such as device-to-device (device to device, D2D) communication, machine type communication (machine type communication, MTC), and a machine-to-machine (machine to machine, M2M) network. In this specification, an example in which an application scenario is the V2X communication is mainly used to describe the technical solutions provided in this application.

In embodiments of this application, a terminal device may be user equipment (user equipment, UE), a vehicle, a vehicle-mounted sensor, an on board unit (on board unit, OBU), a road side unit (road side unit, RSU), a subscriber unit, a subscriber station, a mobile station, a remote station, a remote terminal, a mobile device, a user terminal, a terminal, a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a wearable device, or the like.

It should be understood that, in embodiments of this application, the terminal device may alternatively be a chip in the terminal device, or a communication apparatus, a unit, a module, or the like having a D2D or V2X communication function, for example, a vehicle-mounted communication apparatus, a vehicle-mounted communication module, or a vehicle-mounted communication chip.

A network device in embodiments of this application may be a device configured to communicate with a terminal device. For example, the network device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a Wi-Fi system, or the like. For another example, the network device may alternatively be a module or a unit that completes some functions of the base station. For example, the network device may be a centralized unit (central unit, CU) or a distributed unit (distributed unit, DU). For still another example, the network device may alternatively be a radio controller, a relay station, an access point, a vehicle-mounted device, a wearable device, or an access network device in another future evolved communication system in a cloud radio access network (cloud radio access network, CRAN) scenario. A specific technology and a specific device form that are used by the network device are not limited in this application.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (which is also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a function module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD)), a digital versatile disc (digital versatile disc, DVD), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

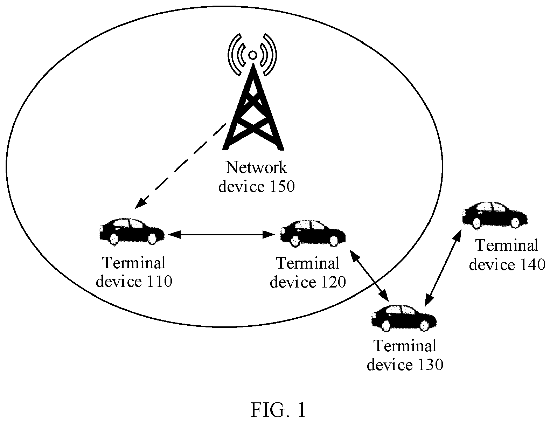

FIG. 1 is a schematic diagram of a scenario to which this application is applicable. As shown in FIG. 1, terminal device 110 and terminal device 120 are located within coverage of network device 150, and terminal device 130 and terminal device 140 are located outside the coverage of network device 150. This application may be applied to V2X communication within coverage of a network device, for example, communication (or transmission) between terminal device 110 and terminal device 120; or may be applied to V2X communication within partial coverage of a network device, for example, communication between terminal device 120 and terminal device 130; or may be applied to V2X communication without network coverage, for example, communication between terminal device 130 and terminal device 140.

A direct communication interface between terminal devices having a V2X communication function is a PC5 interface, and a direct communication link between the terminal devices having the V2X communication function is defined as a sidelink (sidelink, SL). Therefore, the V2X communication may also be referred to as sidelink communication or sidelink transmission; and a time-frequency resource for the V2X communication, namely, a time-frequency resource for the sidelink transmission, may also be referred to as a sidelink resource. Usually, a resource for one sidelink transmission of a terminal device occupies one slot in time domain, and occupies one or more sub-channels in frequency domain. However, this is not limited in this application. In this application, a resource for one sidelink transmission may occupy one or more time units in time domain, and may occupy one or more sub-channels in frequency domain. The time unit may be a subframe, a slot (slot), a symbol, a mini-slot (mini-slot), or the like. Duration of the mini-slot is shorter than that of the slot. For example, the duration of the mini-slot may be two symbols, four symbols, seven symbols, or the like. One sidelink transmission may mean one time of sidelink sending performed by a transmit-end terminal device and one time of sidelink receiving performed by a corresponding receive-end terminal device.

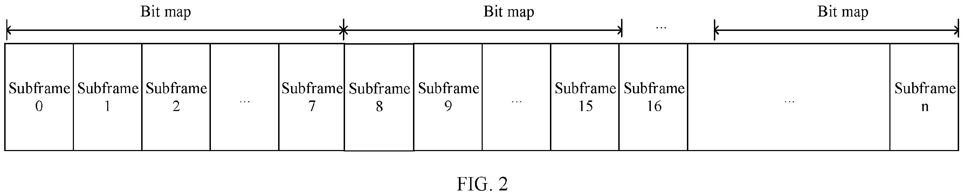

The time-frequency resource for the V2X communication may be configured based on a V2X communication resource pool (which may also be referred to as a V2X resource set, a V2X resource pool, a sidelink resource pool, or the like). The V2X communication resource pool may be considered as a set including a time domain resource and a frequency resource for the V2X communication. For example, for a time domain resource, a network device may use a bit map (bit map) and periodically repeat the bit map to indicate a set of subframes that are of all subframes in a system and that can be used for V2X communication. A time length of one subframe is 1 ms. FIG. 2 is a schematic diagram of indicating, by using a bit map, a subframe used for V2X communication. For example, a bit "1" may be used to indicate that a specific subframe is used for the V2X communication, and a bit "0" may be used to indicate that a specific subframe is not used for the V2X communication. A length of the bit map in the example shown in FIG. 2 is eight bits.

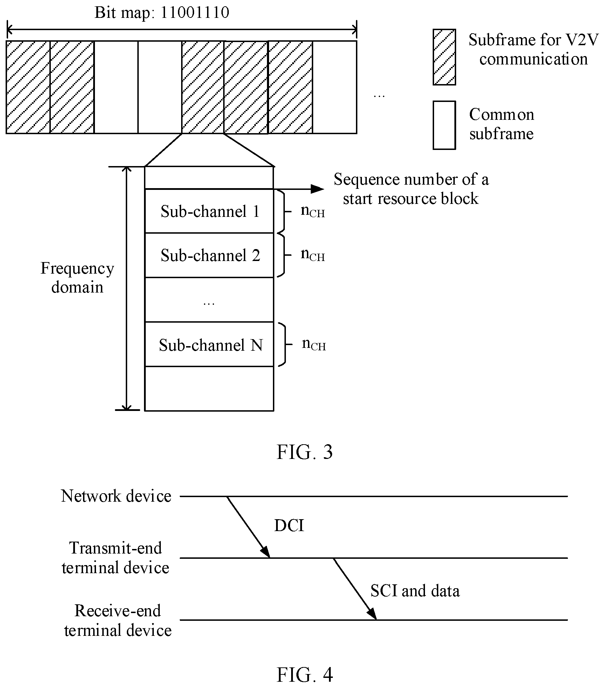

For a frequency resource in a V2X communication resource pool, a network device may divide a frequency band used for V2X communication into several sub-channels, and each sub-channel includes a specific quantity of resource blocks (resource blocks, RBs). FIG. 3 is a schematic diagram of an example of a time-frequency resource in a V2X communication resource pool. As shown in FIG. 3, a bit "1" is used to indicate that a specific subframe can be used for V2X communication, and a bit "0" is used to indicate that a specific subframe is not used for the V2X communication. In addition, a network device may indicate a sequence number of the first resource block of a frequency resource used for the V2X communication, where a total quantity of sub-channels included in the V2X communication resource pool is N, and a quantity of resource blocks included in each sub-channel is n_{CH}. It should be understood that the subframe in the foregoing descriptions is a time unit defined in a communication system (for example, NR), and a time length of one subframe is 1 ms.

The V2X communication mainly includes two modes for determining a transmission resource: mode 1 and mode 2.

Mode 1 is a mode that is based on scheduling performed by a network device (for example, a base station), and is used for V2X communication within coverage of the network device. To be specific, a transmit-end terminal device sends sidelink control information (sidelink control information, SCI) and data to a receive-end terminal device on a scheduled time-frequency resource based on scheduling information of the network device. Dynamic scheduling in mode 1 is used as an example. The network device centrally allocates resources based on buffer status reports (buffer status reports, BSRs) reported by one or more terminal devices. A resource allocated by the network device to each terminal device belongs to a V2X communication resource pool. Specifically, as shown in FIG. 4, a network device notifies, by using downlink control information (downlink control information, DCI), a transmit-end terminal device of a resource for V2X communication. After receiving the DCI, the transmit-end terminal device sends sidelink control information (sidelink control information, SCI) and data to a receive end on a sidelink resource indicated by the DCI. In transmission mode 1, a resource used by each terminal device to perform V2X communication is centrally scheduled by the network device, so that collision may be avoided.

Mode 2 is a mode in which a terminal device autonomously selects a resource. This mode does not depend on scheduling of a network device, and is not limited by network coverage. When there is no network coverage, a transmit-end terminal device may also use this mode for communication. Specifically, when the transmit-end terminal device needs to send data to a receive-end terminal device, the transmit-end terminal device may select a resource in idle mode from a pre-configured V2X communication resource pool based on a monitoring result obtained in a previous period of time, and send SCI and data on the selected resource.

For ease of understanding mode 2, a resource reservation mechanism of the terminal device is described.

After determining a time-frequency resource for V2X communication, a transmit-end terminal device may send SCI and data to a receive-end terminal device on the time-frequency resource. The SCI may indicate a reservation periodicity or a reservation time interval of the time-frequency resource. The receive-end terminal device may learn, based on the reservation periodicity or the reservation time interval, that the transmit-end terminal device is to reserve a resource based on the reservation periodicity or the reservation time interval. A unit of time of the reservation periodicity may be a time unit, for example, a subframe, a slot, or a mini-slot, or may be an absolute time unit, for example, s or ms. The reservation time interval may include one or more time intervals, for example, may be represented as ΔT1, ΔT2, ΔT3, or the like. A unit of the one or more time intervals each may be a time unit, for example, a subframe, a slot, or a mini-slot, or may be an absolute time unit, for example, s or ms.

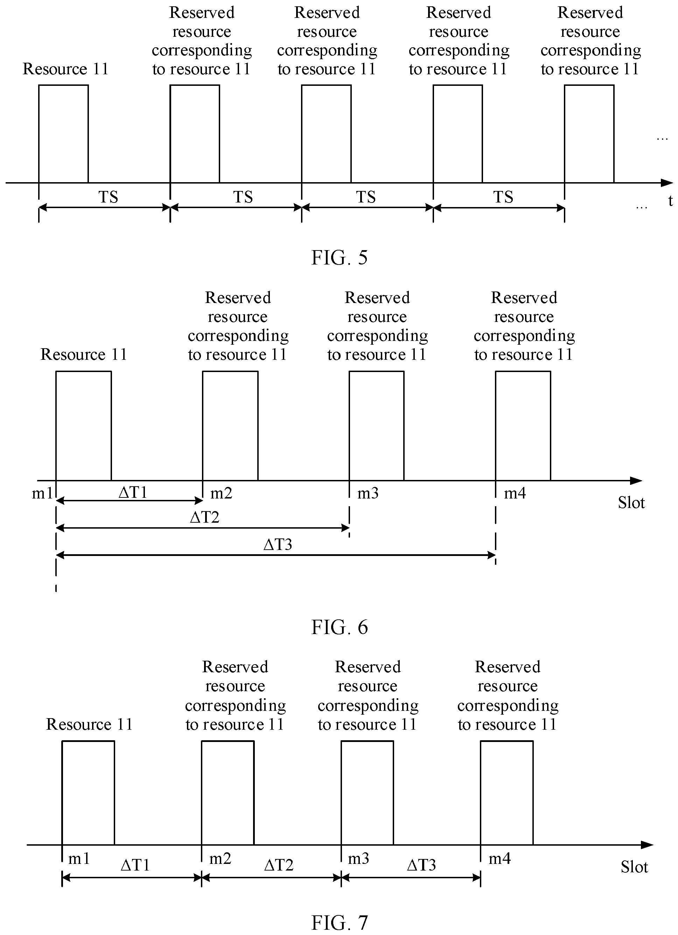

For example, refer to FIG. 5. FIG. 5 is a schematic diagram of reserving the foregoing time-frequency resource (which is represented as resource 11) based on a reservation periodicity TS. It should be understood that resource 11 and a reserved resource corresponding to resource 11 are distributed based on the periodicity TS, and frequency domain resources occupied by resource 11 and the reserved resource corresponding to resource 11 are the same

For another example, refer to FIG. 6 and FIG. 7. FIG. 6 and FIG. 7 are schematic diagrams of reserving the foregoing time-frequency resource (which is represented as resource 11) based on the reservation time intervals ΔT1, ΔT2, and ΔT3. It should be understood that frequency domain resources occupied by resource 11 and a reserved resource corresponding to resource 11 are the same.

In FIG. 6, time reference points of ΔT 1, ΔT2, and ΔT3 are all at a start location of resource 11. In FIG. 7, a time reference point of ΔT is at a start location of resource 11. A time reference point of ΔT 1 is at a start location of the first reserved resource corresponding to resource 11. A time reference point of ΔT2 is at a start location of the second reserved resource corresponding to resource 11. A time reference point of ΔT3 is at a start location of the third reserved resource corresponding to resource 11. In FIG. 7, any two of ΔT 1, ΔT2, and ΔT3 may be equal or unequal.

In FIG. 6 and FIG. 7, it is assumed that a unit of the time interval is a slot. In addition, it is assumed that the start location of resource 11 is slot m1; the start location of the first reserved resource corresponding to resource 11 is slot m2; the start location of the second reserved resource corresponding to resource 11 is slot m3; and the start location of the third reserved resource corresponding to resource 11 is slot m4. In this case, in FIG. 6, ΔT1=m2-m1, ΔT2=m3-m1, and ΔT3=m4-m1. In FIG. 7, ΔT1=m2-m1, ΔT2=m3-m2, and ΔT3=m4-m3.

The following describes mode 2 in detail with reference to FIG. 7.

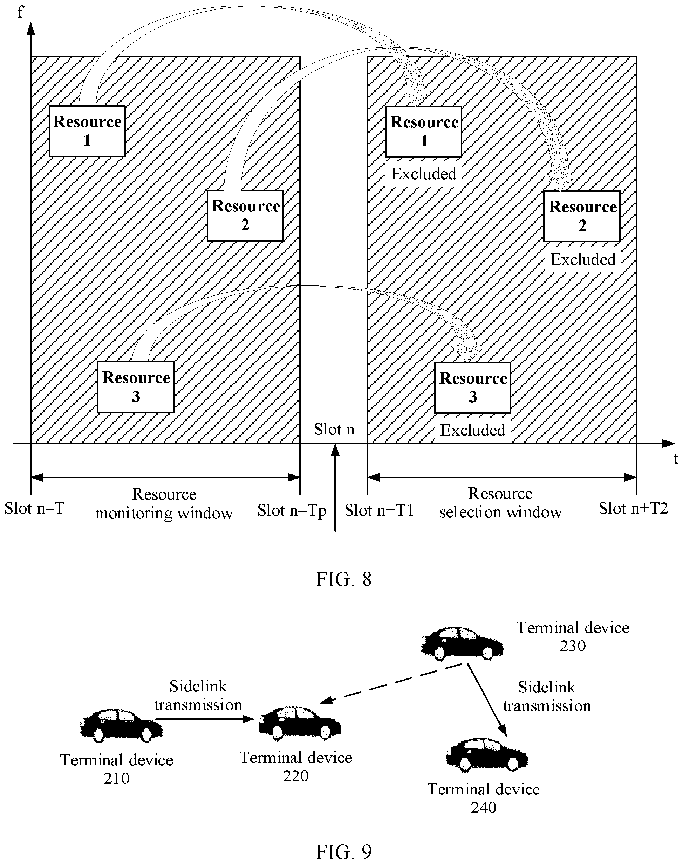

FIG. 8 is a schematic diagram of selecting a resource through monitoring by a transmit-end terminal device. In FIG. 8, assuming that the transmit-end terminal device triggers resource selection in slot n, the transmit-end terminal device may select, based on a resource monitoring result obtained in a time period [n-T, n-Tp] that is before slot n, a resource from a time-frequency resource corresponding to a time period [n+T1, n+T2] that is after slot n. [n-T, n-Tp] may be referred to as a resource monitoring window, where Tp is a parameter related to a processing latency of a terminal device, and Tp may be 0. [n+T1, n+T2] may be referred to as a resource selection window, where T1 may be 0. A length of the resource monitoring window or the resource selection window may be one or more time units. For a meaning of the time unit, refer to the foregoing descriptions. Alternatively, a length of the resource monitoring window or the resource selection window may be an absolute time length, for example, 100 ms or 1000 ms. In addition, the lengths of the resource monitoring window and the resource selection window may be equal or unequal.

Refer to FIG. 8. First, the transmit-end terminal device monitors, in the resource monitoring window [n-T, n-Tp], SCI sent by another terminal device. If successfully decoding a specific piece of SCI, the transmit-end terminal device measures a demodulation reference signal (demodulation reference signal, DMRS) corresponding to a physical sidelink control channel (physical sidelink control channel, PSCCH) corresponding to the SCI; or measures a DMRS corresponding to a physical sidelink shared channel (physical sidelink shared channel, PSSCH) associated with the SCI, to obtain reference signal received power (reference signal received power, RSRP). Alternatively, the transmit-end terminal device may measure all received signals of a slot in which the SCI is located or a reference signal, interference, and noise of the slot in which the SCI is located, to obtain a received signal strength indicator (received signal strength indicator, RSSI), a signal to interference plus noise ratio (signal-to-interference noise ratio, SINR), or the like. For example, a DMRS is measured. If RSRP corresponding to a resource carrying the SCI is greater than a preset RSRP threshold Th_{RSRP}, the transmit-end terminal device considers that the resource is an unavailable sidelink resource, and considers that a reserved resource corresponding to the resource is also an unavailable sidelink resource. Therefore, when selecting a resource, the transmit-end terminal device excludes the resource from the resource selection window. The reserved resource corresponding to the resource may be determined based on a reservation periodicity or a reservation time interval in the SCI. For details, refer to the foregoing descriptions. It should be understood that a similar principle may also be applicable when an RSSI and/or an SINR are measured. For example, if an RSSI corresponding to a resource is greater than (or greater than or equal to) a threshold, it is considered that the resource is an unavailable sidelink resource. For example, Th_{RSRP} may be associated with a priority corresponding to data indicated by the received SCI and a priority corresponding to to-be-sent data of the transmit-end terminal device. Alternatively, Th_{RSRP} may be obtained in another manner, for example, may be configured by a network device. A specific value of Th_{RSRP} is not limited in this application.

As shown in FIG. 8, the transmit-end terminal device obtains, on resource 1, resource 2, and resource 3 through monitoring, SCI sent by another terminal device, where RSRP corresponding to the SCI is greater than TH_{RSRP}. In addition, time-frequency resources corresponding to the resource selection window include reserved resources (which are also represented as resource 1, resource 2, and resource 3 in this application) respectively corresponding to resource 1, resource 2, and resource 3. Therefore, when selecting a resource, the transmit-end terminal device excludes resource 1, resource 2, and resource 3 in the resource selection window.

In mode 2, each terminal device separately performs monitoring and resource selection. Therefore, resource collision may occur. FIG. 9 shows an example in which resource collision may occur. As shown in FIG. 9, terminal device 210 sends sidelink control information and data to terminal device 220 on resource A selected by terminal device 210. However, terminal device 230 in the vicinity of terminal device 220 also sends sidelink control information and data to terminal device 240 on resource A (where terminal device 230 is outside a monitoring range of terminal device 210, and terminal device 210 cannot exclude, through monitoring, a resource occupied by terminal device 230, and therefore considers that resource A is available). Therefore, terminal device 220 is interfered with by terminal device 230 on resource A, and may fail to correctly receive the sidelink control information and the data that are sent by terminal device 210.

In conclusion, when selecting a resource, a transmit-end terminal device selects the resource based only on a monitoring result of the transmit-end terminal device, without considering a network environment of a receive-end terminal device. Therefore, a case in which the resource selected by the transmit-end terminal device is not suitable for the receive-end terminal device may occur. To resolve this problem, this application provides a sidelink resource determining method. A transmit-end terminal device selects a resource based on a monitoring result of the transmit-end terminal device and a resource reported by a receive-end terminal device and/or a terminal device other than the receive-end terminal device. This helps select a suitable resource for sidelink transmission.

The following describes in detail the sidelink resource determining method provided in this application. It should be understood that, in embodiments of this application, that a terminal device (for example, a first terminal device or a second terminal device) performs the method in embodiments is used as an example to describe the method in embodiments. By way of example but not limitation, the method may alternatively be performed by a chip used in the terminal device, or a part or a component that can implement a communication function. For example, when a method 1000 or 1300 is applied to a V2X communication system, the first terminal device and/or the second terminal device may be a vehicle, a vehicle-mounted device, a mobile phone terminal, or the like in V2X communication.

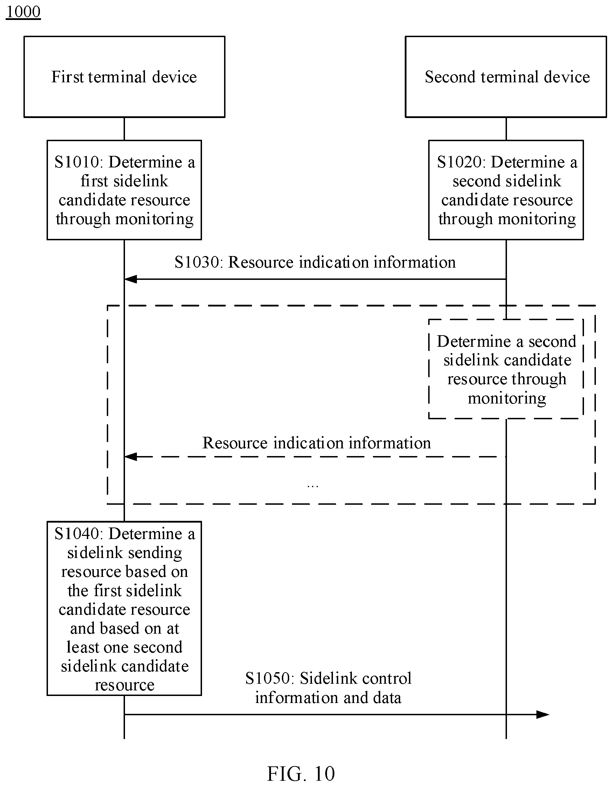

FIG. 10 is a schematic flowchart of a sidelink resource determining method 1000 according to this application. The method 1000 may include S1010 to S1050. The following describes the steps.

S 10 10: A first terminal device determines a first sidelink candidate resource through monitoring.

The first terminal device may perform monitoring in a monitoring manner in mode 2 described above, or may perform monitoring in another monitoring manner. The first terminal device may determine an unavailable sidelink resource in a resource selection window through monitoring, and all or a part of sidelink resources other than the unavailable sidelink resource in the resource selection window may serve as the first sidelink candidate resource.

S1020: A second terminal device determines a second sidelink candidate resource through monitoring.

S1030: The second terminal device sends resource indication information to the first terminal device. Accordingly, the first terminal device receives the resource indication information from the second terminal device. The resource indication information indicates the second sidelink candidate resource obtained by the second terminal device through monitoring.

It should be understood that a sequence of S1010 and S1020 is not limited in this application. For example, S1010 may be performed before S1020, or S1020 may be performed before S1010, or S1010 and S1020 may be simultaneously performed. The second terminal device may be a receive-end terminal device to which the first terminal device is to send current data, or may be a terminal device other than the receive-end terminal device. Alternatively, the second terminal device may include a receive-end terminal device and a terminal device other than the receive-end terminal device.

The second terminal device may perform monitoring in the monitoring manner in mode 2 described above, or may perform monitoring in another monitoring manner. The second terminal device may determine an unavailable sidelink resource in a resource selection window of the second terminal device through monitoring, and all or a part of sidelink resources other than the unavailable sidelink resource in the resource selection window serve as the second sidelink candidate resource. After determining the second sidelink candidate resource, the second terminal device may report the second sidelink candidate resource to the first terminal device by using the resource indication information.

It should be understood that the second sidelink candidate resource may include one or more sidelink resources, where each sidelink resource is for one sidelink transmission. It can be learned from the foregoing descriptions of a time-frequency resource occupied by one sidelink transmission that each sidelink resource corresponds to one or more time units in time domain, and corresponds to one or more sub-channels in frequency domain. For a meaning of the time unit, refer to the foregoing descriptions.

It should be noted that a length, a start location, and an end location of a resource monitoring window of the first terminal device may be the same as or different from those of a resource monitoring window of the second terminal device. Similarly, a length, a start location, and an end location of the resource selection window of the first terminal device may be the same as or different from those of the resource selection window of the second terminal device.

Optionally, the second terminal device may include the resource indication information in SCI, a MAC CE, or RRC signaling. The resource indication information may be carried on a PSCCH or a PSSCH.

Optionally, the second terminal device may send the resource indication information to the first terminal device in a unicast manner or a broadcast manner.

It should be understood that S 1020 and S1030 may be repeatedly performed. S1020 and S1030 may be performed periodically or aperiodically. For example, the second terminal device may periodically perform monitoring, and report, to the first terminal device, the second sidelink candidate resource determined through monitoring. Alternatively, the second terminal device may aperiodically perform monitoring, and report, to the first terminal device, the second sidelink candidate resource determined through monitoring. In addition, the second terminal device may send the resource indication information when there is data to be sent to the first terminal device, that is, the data and the resource indication information are sent together. Alternatively, the second terminal device may separately send the resource indication information, that is, data and the resource indication information are not sent together.

S1040: The first terminal device determines a sidelink sending resource based on the first sidelink candidate resource and based on the at least one second sidelink candidate resource.

To be specific, the first terminal device may determine, based on a monitoring result of the first terminal device and the second sidelink candidate resource reported by the second terminal device for one or more times, an available sidelink resource in the resource selection window, and select the sidelink sending resource from the available sidelink resource, to send sidelink control information and data.

For example, if the first sidelink candidate resource and the at least one second sidelink candidate resource overlap, the first terminal device may determine, as the available sidelink resource, a resource that is in the at least one second sidelink candidate resource and that overlaps the first sidelink candidate resource. If the first sidelink candidate resource and the at least one second sidelink candidate resource do not overlap, the first terminal device may use the first sidelink candidate resource as the available sidelink resource, or use the at least one second sidelink candidate resource as the available sidelink resource, or use a union set of the first sidelink candidate resource and the at least one second candidate sidelink resource as the available sidelink resource.

After determining the available sidelink resource, the first terminal device may select the sidelink sending resource from the available sidelink resource. For example, the first terminal device may randomly select one or more sidelink resources from the available sidelink resource as the sidelink sending resource. Alternatively, the first terminal device may select one or more sidelink resources from the available sidelink resource as the sidelink sending resource based on an interference level minimization or RSRP minimization principle. Alternatively, the first terminal device may determine the sidelink sending resource in another possible manner. This is not specifically limited in this application.

It should be understood that the at least one second sidelink candidate resource in S1040 is indicated by at least one piece of resource indication information.

The at least one piece of resource indication information may be resource indication information reported by the second terminal device within a specific time range. In this way, the first terminal device considers only a second sidelink candidate resource indicated by the resource indication information reported within the specific time range, to help select a more suitable sidelink sending resource.

Optionally, a time interval between a time point at which the first terminal device receives the at least one piece of resource indication information and a first time point (time point) is less than (or less than or equal to) a preset time interval.

In other words, for any one of the at least one piece of resource indication information, a time interval between a time point at which the first terminal device receives the resource indication information and the first time point is less than (or less than or equal to) the preset time interval. The first time point is a time point at which the first terminal device determines the first sidelink candidate resource, a time point at which the first terminal device determines the sidelink sending resource, or a time point at which a higher layer triggers the first terminal device to select a resource (that is, to determine the sidelink sending resource). The first time point may be a slot or a start point of a slot, a subframe or a start point of a subframe, a symbol or a start point of a symbol, or the like. The preset time interval may be implemented in any one of the following manners: configuration performed by a network device, preconfiguration, configuration performed by the first terminal device, configuration performed by the second terminal device, or configuration performed by a terminal device other than the first terminal device and the second terminal device. In addition, the configuration may be performed based on a resource pool or separately performed by each terminal device. This is not limited in this application. It should be understood that the preconfiguration in this specification refers to a protocol specification or a factory setting.

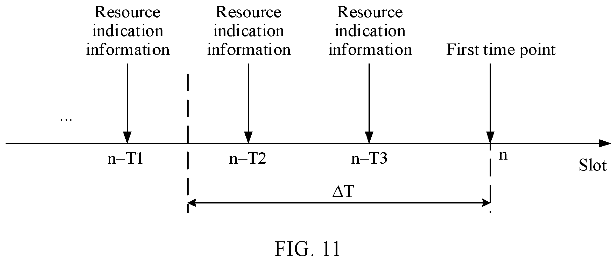

This is described with reference to FIG. 11. Refer to FIG. 11. Slot n is the first time point. To be specific, a transmit-end terminal device needs to send data in slot n, and determines a first sidelink candidate resource based on a monitoring result of the transmit-end terminal device. The first terminal device separately receives, in slots n-T3, n-T2, and n-T1 and at earlier time, resource indication information sent by the second terminal device. If a time interval between slot n-T3 and slot n and a time interval between slot n-T2 and slot n are less than (or less than or equal to) a preset time interval ΔT, and a time interval between slot n-T 1 and slot n is greater than or equal to (or greater than) the preset time interval ΔT, the first terminal device may determine a sidelink sending resource based on a first sidelink candidate resource and based on a second sidelink candidate resource separately indicated by the resource indication information received in slot n-T3 and slot n-T2

Optionally, the at least one piece of resource indication information is resource indication information that is most recently received by the first terminal device for one or more times prior to the first time point. For a meaning of the first time point, refer to the foregoing descriptions.

In other words, the first terminal device may determine the sidelink sending resource based on the first sidelink candidate resource and based on the second sidelink candidate resource that is respectively indicated by the resource indication information that is most recently received for one or more times.

S1050: The first terminal device sends the sidelink control information and the data on the determined sidelink sending resource.

Specifically, the first terminal device sends the sidelink control information and the data to a receive-end terminal device on the determined sidelink sending resource.

In conclusion, according to the sidelink resource determining method provided in this application, when the first terminal device needs to send data, the first terminal device may determine the sidelink sending resource based on the first sidelink candidate resource determined through monitoring, and based on the at least one second sidelink candidate resource that is determined by the second terminal device based on monitoring and that is reported by the second terminal device for one or more times. The first terminal device fully considers a monitoring result of the second terminal device. Therefore, this helps avoid a problem of inappropriate resource selection, to improve sidelink transmission reliability.

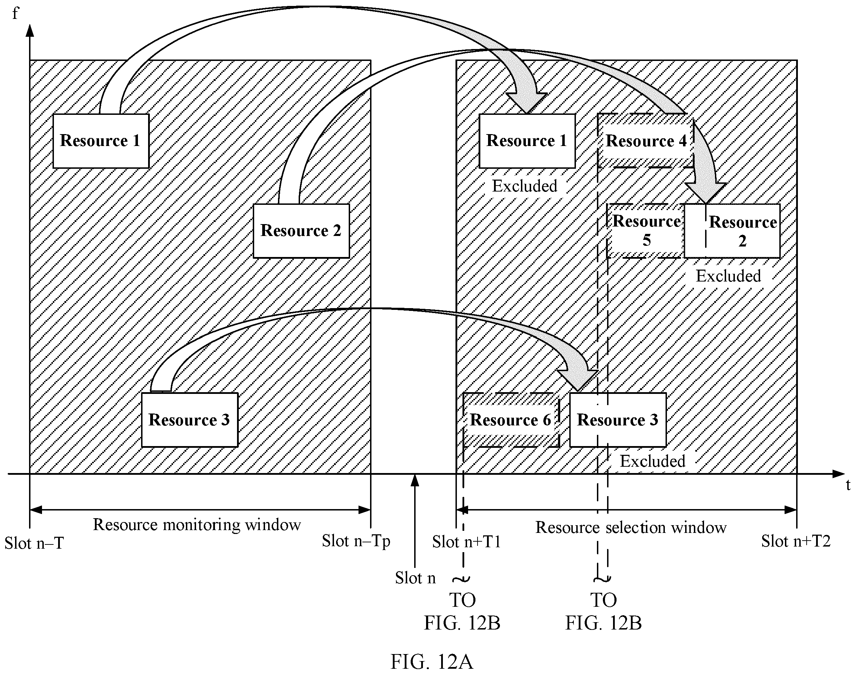

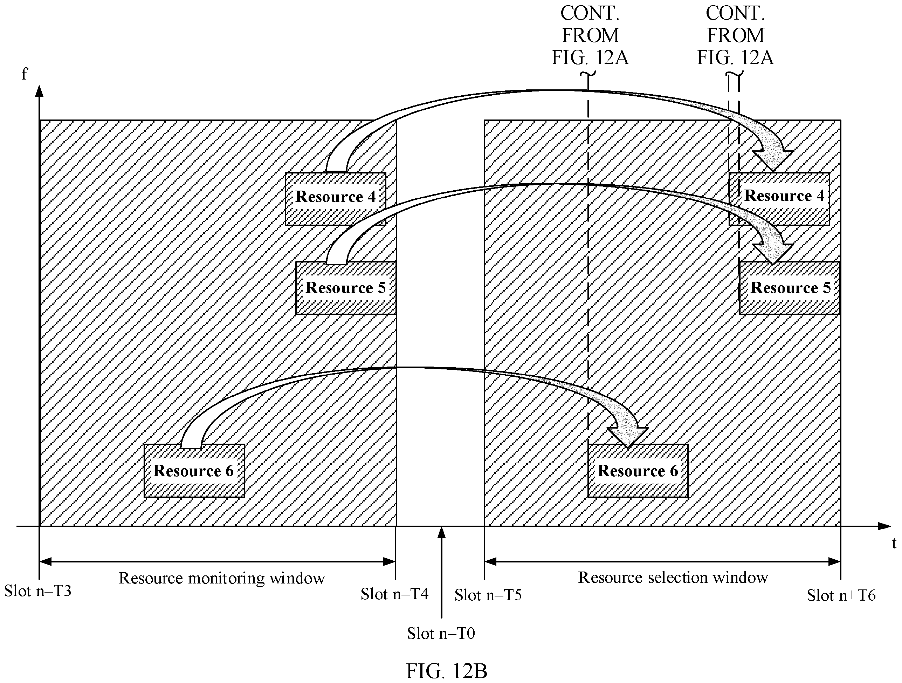

The following further describes the method 1000 with reference to a schematic diagram of resource selection shown in FIG. 12A and FIG. 12B.

Refer to FIG. 12A and FIG. 12B. When determining, in slot n, that there is data that needs to be sent to a receive-end terminal device, a first terminal device may determine a sidelink sending resource based on a monitoring result obtained in a resource monitoring window [n-T, n-Tp] and resource indication information sent by a second terminal device to the first terminal device in slot n-TO.

The first terminal device performs monitoring in the resource monitoring window [n-T, n-Tp], and determines that RSRP respectively corresponding to resource 1, resource 2, and resource 3 in the resource monitoring window [n-T, n-Tp] is greater than a preset RSRP threshold, to determine that resource 1, resource 2, and resource 3 in a resource selection window [n+T1, n+T2] are unavailable sidelink resources. Resource 1, resource 2, and resource 3 in the resource selection window [n+T1, n+T2] are respectively reserved resources corresponding to resource 1, resource 2, and resource 3. Therefore, the first terminal device may use all or a part of sidelink resources other than resource 1, resource 2, and resource 3 in the resource selection window [n+T1, n+T2] as a first sidelink candidate resource.

The second terminal device performs monitoring in a resource monitoring window [n-T3, n-T4], to determine that sidelink resources other than resource 4, resource 5, and resource 6 in a resource selection window [n-T5, n+T6] are all unavailable sidelink resources. Therefore, the first terminal device uses resource 4, resource 5, and resource 6 in the resource selection window [n-T5, n+T6] as a second sidelink candidate resource. In addition, the second terminal device sends the resource indication information to the first terminal device in slot n-TO, where the resource indication information indicates that resource 4, resource 5, and resource 6 in the resource selection window [n-T5, n+T6] are the second sidelink candidate resource. It should be understood that the second terminal device may alternatively use a part of resource 4, resource 5, and resource 6 as the second sidelink candidate resource. Optionally, in this application, the resource indication information may specifically indicate a start location of the second sidelink candidate resource in frequency domain and one or more of the following: an index of a time unit corresponding to the second sidelink candidate resource; an offset (offset) of the time unit corresponding to the second sidelink candidate resource with respect to a time reference point; and a reservation periodicity or a reservation time interval of the second sidelink candidate resource. For a meaning of the time unit, refer to the foregoing descriptions.

If each sidelink resource included in the second sidelink candidate resource occupies one time unit, the index of the time unit corresponding to the second sidelink candidate resource refers to an index of a time unit occupied by each sidelink resource included in the second sidelink candidate resource. For example, corresponding to FIG. 12A and FIG. 12B, the index of the time unit corresponding to the second sidelink candidate resource includes indexes of slots in which resource 4, resource 5, and resource 6 in the resource selection window [n-T5, n+T6] are located.

If each sidelink resource included in the second sidelink candidate resource occupies a plurality of time units, the index of the time unit corresponding to the second sidelink candidate resource refers to an index of a start time unit and an index of an end time unit that are occupied by each sidelink resource included in the second sidelink candidate resource. Alternatively, if each sidelink resource included in the second sidelink candidate resource occupies a plurality of time units, the index of the time unit corresponding to the second sidelink candidate resource refers to an index of a start time unit occupied by each sidelink resource included in the second sidelink candidate resource. In addition, the resource indication information may further include a quantity of time units for which each sidelink unit lasts.

The offset of the time unit corresponding to the second sidelink candidate resource with respect to the time reference point refers to an offset, with respect to the time reference point, of a time unit (or a start location of a time unit) occupied by each sidelink resource included in the second sidelink candidate resource. The first terminal device may determine, based on the time reference point and the offset, the time unit occupied by each sidelink resource in the second sidelink candidate resource. For example, corresponding to FIG. 12A and FIG. 12B, the offset of the time unit corresponding to the second sidelink candidate resource with respect to the time reference point may be offsets, with respect to the time reference point, of slots (or start locations of slots) occupied by resource 4, resource 5, and resource 6 in the resource selection window [n-T5, n+T6].

For example, the time reference point may be a moment (for example, slot n-TO or a start point of slot n-TO) at which the first terminal device receives the resource indication information. Alternatively, the time reference point may be configured by a network device, or may be preconfigured, or may be configured by a terminal device other than the first terminal device and the second terminal device. For example, the time reference point is slot n-TO. The offsets, with respect to the time reference point, of resource 4, resource 5, and resource 6 in the resource selection window [n-T5, n+T6] are respectively time intervals between the slots in which resource 4, resource 5, and resource 6 are respectively located and slot n-TO. In this application, a unit of the offset may be a time unit (for example, a slot) or an absolute time unit (for example, ms).

The reservation periodicity of the second sidelink candidate resource refers to a reservation periodicity of all or a part of sidelink resources included in the second sidelink candidate resource. Similarly, the reservation time interval of the second sidelink candidate resource refers to a reservation time interval of all or a part of sidelink resources included in the second sidelink candidate resource. The first terminal device may reserve all or a part of sidelink resources in the second sidelink candidate resource based on the reservation periodicity or the reservation time interval. Resource 4 is used as an example. If the resource indication information includes a reservation periodicity or a reservation time interval of resource 4 in the resource selection window [n-T5, n+T6] or the resource monitoring window [n-T3, n-T4], the first terminal device considers that each reserved resource that corresponds to resource 4 and that is determined based on the reservation periodicity or the reservation time interval is available. For example, it is assumed that the reservation periodicity of resource 4 is two slots, an index of a slot in which resource 4 in the resource selection window [n-T5, n+T6] is located is n4, and a location of resource 4 in frequency domain is sub-channel 1. In this case, all time-frequency resources whose time domain locations are slot n4+2*R and whose frequency domain locations are sub-channel 1 are the reserved resources of resource 4, and the first terminal device considers that all these resources are available, where R=1, 2, 3, 4, or the like. It should be understood that for details of the reservation time interval, refer to the foregoing descriptions of the resource reservation mechanism of the terminal device.

After receiving the resource indication information sent by the second terminal device, the first terminal device may determine an available sidelink resource in the resource selection window [n+T1, n+T2]. Refer to FIG. 12A and FIG. 12B. Resource 2 and resource 5 partially overlap, and other resources do not overlap. The first terminal device may determine that resource 1 and resource 3 are available sidelink resources, and may select a resource from resource 1 and resource 3 as the sidelink sending resource.

It should be noted that slot n-TO in which the second terminal device sends (or the first terminal device receives) the resource indication information and slot n-T4 in which a boundary of the resource monitoring window of the second terminal device is located may alternatively overlap, that is, n-T0≥n-T4. In addition, a frequency domain size of each sidelink resource in the second sidelink candidate resource and a size of the second sidelink candidate resource (namely, a quantity of sidelink resources included in the second sidelink candidate resource) may be configured by the network device, or may be preconfigured, or may be configured by the first terminal device, or may be configured by the terminal device other than the first terminal device and the second terminal device. The configuration may be performed based on a resource pool or separately performed by each terminal device. This is not limited in this application.

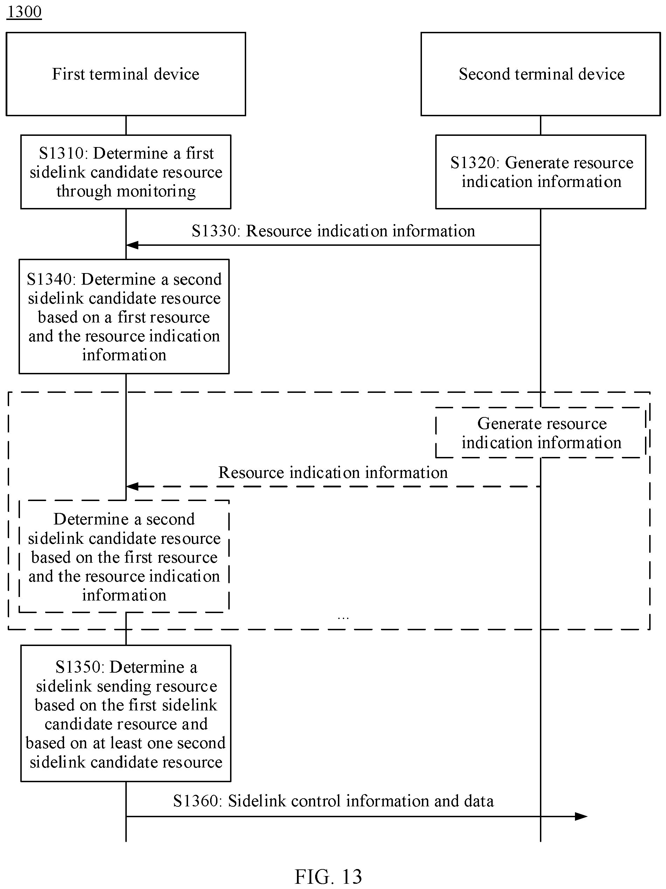

FIG. 13 is a schematic flowchart of another sidelink resource determining method 1300 according to this application. The method 1300 may include S1310 to S1360. The following describes the steps.

S1310: A first terminal device determines a first sidelink candidate resource through monitoring.

This step is the same as S1010. Refer to S1010.

S1320: A second terminal device generates resource indication information.

S1330: The second terminal device sends the resource indication information to the first terminal device on a first resource. Accordingly, the first terminal device receives the resource indication information.

It should be understood that a sequence of S1310 and S1320 is not limited in this application. For example, S1310 may be performed before S1320, or S1320 may be performed before S1310, or S1310 and S1320 may be simultaneously performed.

The second terminal device may be a receive-end terminal device to which the first terminal device is to send current data, or may be a terminal device other than the receive-end terminal device. Alternatively, the second terminal device may include a receive-end terminal device and a terminal device other than the receive-end terminal device.

The resource indication information indicates a reservation periodicity or a reservation time interval of the first resource. In other words, the resource indication information may indicate a reservation periodicity or a reservation time interval of a resource that carries the resource indication information, and the second terminal device reserves the first resource based on the reservation periodicity or the reservation time interval. A unit of time of the reservation periodicity may be a time unit, for example, a subframe, a slot, or a mini-slot, or may be an absolute time unit, for example, s or ms. The reservation time interval may include one or more time intervals. A unit of the one or more time intervals each may be a time unit, for example, a subframe, a slot, or a mini-slot, or may be an absolute time unit, for example, s or ms. For resource reservation and related content, for example, a specific time reference point of the one or more time intervals, refer to the foregoing descriptions of the resource reservation mechanism of the terminal device. Details are not described herein again.

Optionally, the resource indication information may further indicate that the first resource is used by the first terminal device to perform sidelink sending (or transmission). For example, the resource indication information includes two parts of information. One part of information is the reservation periodicity or the reservation time interval of the first resource, and the other part of information indicates that the first resource is used by the first terminal device to perform sidelink sending.

In addition, the resource indication information may alternatively not indicate that the first resource is used by the first terminal device to perform sidelink sending. In other words, the resource indication information may not include information indicating that the first resource is used by the first terminal device to perform sidelink sending. For example, that a resource indicated by the resource indication information sent by the second terminal device is used by the first terminal device to perform sidelink sending may be predefined in a manner of configuration performed by a network device, preconfiguration, or configuration performed by a terminal device other than the first terminal device and the second terminal device.

It should be understood that the first resource may occupy one time unit in time domain, and occupy one or more sub-channels in frequency domain. For a meaning of the time unit, refer to the foregoing descriptions.

Optionally, the resource indication information may be included in sidelink control information. The sidelink control information may be carried on a PSCCH or a PSSCH.

Optionally, the second terminal device may send the resource indication information to the first terminal device in a unicast manner or a broadcast manner.

S1340: The first terminal device determines a second sidelink candidate resource based on the first resource and the resource indication information.

Specifically, the first terminal device may determine, based on the first resource and the resource indication information, a reserved resource that is of the first resource and that is located in a resource selection window of the first terminal device. The reserved resource that is of the first resource and that is located in the resource selection window of the first terminal device is the second sidelink candidate resource.

It should be understood that S1320 to S1340 may be performed for one or more times, and resource indication information that is generated each time may indicate same or different first resources, and indicate same or different reservation periodicities (or reservation time intervals) of the first resources. This is not limited in this application. Accordingly, second sidelink candidate resources determined by the first terminal device each time may be the same or may be different.

S1350: The first terminal device determines a sidelink sending resource based on the first sidelink candidate resource and based on at least one second sidelink candidate resource.

To be specific, the first terminal device may determine, based on a monitoring result of the first terminal device and the second sidelink candidate resource reported by the second terminal device for one or more times, an available sidelink resource in the resource selection window, and select a resource, namely, the sidelink sending resource from the available sidelink resource, to send sidelink control information and data.

For example, if the first sidelink candidate resource and the at least one second sidelink candidate resource overlap, the first terminal device may determine, as the available sidelink resource, a resource that is in the at least one second sidelink candidate resource and that overlaps the first sidelink candidate resource. If the first sidelink candidate resource and the at least one second sidelink candidate resource do not overlap, the first terminal device may use the first sidelink candidate resource as the available sidelink resource, or use the at least one second sidelink candidate resource as the available sidelink resource, or use a union set of the first sidelink candidate resource and the at least one second candidate sidelink resource as the available sidelink resource. Alternatively, when the first sidelink candidate resource and the at least one second sidelink candidate resource do not overlap, if the at least one second sidelink candidate resource includes at least one third sidelink resource, and a priority of the third sidelink resource is higher than that of an unavailable sidelink resource in the resource selection window of the first terminal device, the first terminal device may use the at least one third sidelink resource as the available sidelink resource; or if there is no resource that is in the at least one second sidelink candidate resource and whose priority is higher than that of an unavailable sidelink resource in the resource selection window of the first terminal device, the first terminal device may use a union set of the at least one second sidelink candidate resource and the first sidelink candidate resource as the available sidelink resource.

After determining the available sidelink resource, the first terminal device may select the sidelink sending resource from the available sidelink resource. For example, for example, the first terminal device may randomly select one or more sidelink resources from the available sidelink resource as the sidelink sending resource. Alternatively, the first terminal device may select one or more sidelink resources from the available sidelink resource as the sidelink sending resource based on an interference level minimization or RSRP minimization principle. Alternatively, the first terminal device may determine the sidelink sending resource in another possible manner. This is not specifically limited in this application.

It should be understood that the at least one second sidelink candidate resource in S 1350 is indicated by at least one piece of resource indication information.

The at least one piece of resource indication information may be resource indication information reported by the second terminal device within a specific time range. In this way, the first terminal device considers only a second sidelink candidate resource indicated by the resource indication information reported within the specific time range, to help select a more suitable sidelink sending resource.

Optionally, a time interval between a time point at which the first terminal device receives the at least one piece of resource indication information and a first time point is less than (or less than or equal to) a preset time interval.

In other words, for any one of the at least one piece of resource indication information, a time interval between a time point at which the first terminal device receives the resource indication information and the first time point is less than (or less than or equal to) the preset time interval. The first time point is a time point at which the first terminal device determines the first sidelink candidate resource, a time point at which the first terminal device determines the sidelink sending resource, or a time point at which a higher layer triggers the first terminal device to select a resource (that is, to determine the sidelink sending resource). The first time point may be a slot or a start point of a slot, a subframe or a start point of a subframe, a symbol or a start point of a symbol, or the like. The preset time interval may be implemented in any one of the following manners: configuration performed by a network device, preconfiguration, configuration performed by the first terminal device, configuration performed by the second terminal device, or configuration performed by the terminal device other than the first terminal device and the second terminal device. In addition, the configuration may be performed based on a resource pool or separately performed by each terminal device. This is not limited in this application. It should be understood that the preconfiguration in this specification refers to a protocol specification or a factory setting.

Optionally, the at least one piece of resource indication information is resource indication information that is most recently received by the first terminal device for one or more times prior to the first time point. For a meaning of the first time point, refer to the foregoing descriptions.

In other words, the first terminal device may determine the sidelink sending resource based on the first sidelink candidate resource and based on the second sidelink candidate resource that is respectively indicated by the resource indication information that is most recently received for one or more times.

S1360: The first terminal device sends the sidelink control information and the data on the determined sidelink sending resource.

Specifically, the first terminal device sends the sidelink control information and the data to a receive-end terminal device on the determined sidelink sending resource.

In conclusion, according to the sidelink resource determining method provided in this application, when the first terminal device needs to send data, the first terminal device may determine the sidelink sending resource based on the first sidelink candidate resource determined through monitoring and a reservation periodicity or a reservation time interval of a reserved resource that is reported by the second terminal device for one or more times. The first terminal device fully considers the resource reported by the second terminal device. Therefore, this helps avoid a problem of inappropriate resource selection, to improve sidelink transmission reliability.

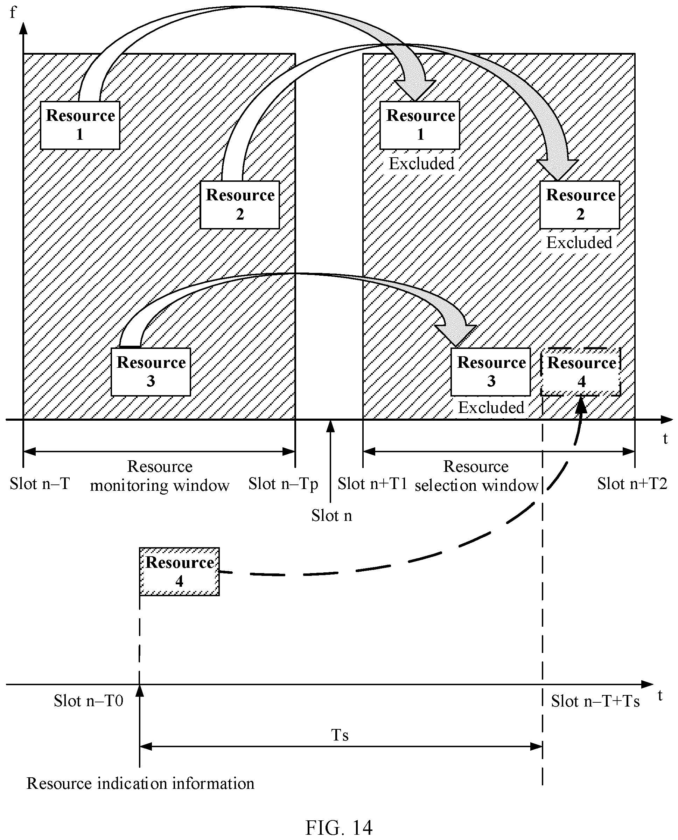

The following further describes the method 1300 with reference to a schematic diagram of resource selection shown in FIG. 14.

Refer to FIG. 14. When determining, in slot n, that there is data that needs to be sent to a receive-end terminal device, a first terminal device may determine a sidelink sending resource based on a monitoring result obtained in a resource monitoring window [n-T, n-Tp] and a reservation periodicity Ts of a reserved resource reported by a second terminal device.

The first terminal device performs monitoring in the resource monitoring window [n-T, n-Tp], and determines that RSRP respectively corresponding to resource 1, resource 2, and resource 3 in the resource monitoring window [n-T, n-Tp] is greater than a preset RSRP threshold, to determine that resource 1, resource 2, and resource 3 in a resource selection window [n+T1, n+T2] are unavailable sidelink resources. Resource 1, resource 2, and resource 3 in the resource selection window [n+T1, n+T2] are respectively reserved resources corresponding to resource 1, resource 2, and resource 3. Therefore, the first terminal device may use all or a part of sidelink resources other than resource 1, resource 2, and resource 3 in the resource selection window [n+T1, n+T2] as a first sidelink candidate resource.

The second terminal device sends resource indication information to the first terminal device on reserved resource resource 4 in slot n-TO, where the resource indication information indicates a reservation periodicity of resource 4, and a reserved resource corresponding to resource 4 after one periodicity is resource 4 in the resource selection window.

After receiving the resource indication information sent by the second terminal device, the first terminal device may determine an available sidelink resource in the resource selection window [n+T1, n+T2]. Refer to FIG. 14. Resource 4 and each of resource 1 to resource 3 do not overlap, so that the first terminal device may determine that resource 4 is an available sidelink resource, and may use resource 4 as the sidelink sending resource.

It should be noted that an end location of slot n-TO in which the second terminal device sends (or the first terminal device receives) the resource indication information may alternatively overlap a start location of slot n. In addition, a frequency domain size of the first resource may be configured by the network device, or may be preconfigured, or may be configured by the first terminal device, or may be configured by the terminal device other than the first terminal device and the second terminal device. The configuration may be performed based on a resource pool or separately performed by each terminal device. This is not limited in this application.

It should be further understood that a value of a sequence number of each of the foregoing process does not mean an order of an execution sequence. The execution sequence of each process should be determined based on a function and internal logic of each process, and should not be construed as any limitation on the implementation processes of embodiments of this application.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

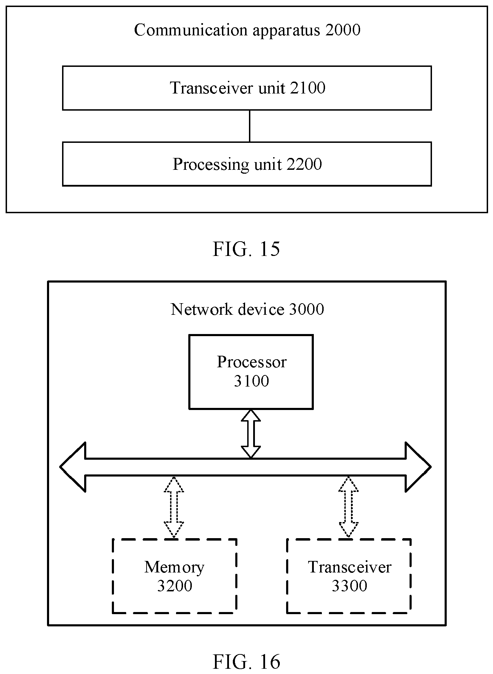

The foregoing describes in detail the sidelink resource determining method in embodiments of this application with reference to FIG. 1 to FIG. 14. The following describes a communication apparatus in embodiments of this application with reference to FIG. 15 to FIG. 17. It should be understood that the communication apparatus in FIG. 15 to FIG. 17 may perform the steps of the sidelink resource determining method provided in this application.

FIG. 14 is a schematic block diagram of a communication apparatus according to an embodiment of this application. As shown in FIG. 14, the communication apparatus 2000 may include a transceiver unit 2010 and a processing unit 2020.

The transceiver unit 2010 may be configured to send information, for example, resource indication information or sidelink control information, to another apparatus or device. The processing unit 2020 may be configured to perform internal processing of the apparatus, for example, determine a sidelink sending resource. The communication apparatus in the foregoing embodiments may be a terminal device, or may be a chip used in the terminal device, or another combined part, component, or the like that can implement a function of the foregoing terminal device. When the communication apparatus is the terminal device, the transceiver unit 2010 may be a transmitter and a receiver, or an integrated transceiver, and may include an antenna, a radio frequency circuit, and the like. The processing unit 2020 may be a processor, for example, a baseband chip. When the communication apparatus is a component having a function of the foregoing terminal device, the transceiver unit 2010 may be a radio frequency unit, and the processing unit 2020 may be a processor. When the communication apparatus is a chip system, the transceiver unit 2010 may be an input/output interface of the chip system, and the processing unit 2020 may be a processor in the chip system, for example, a central processing unit (central processing unit, CPU).

In an implementation, the communication apparatus 2000 corresponds to the first terminal device in the method 1000. The communication apparatus 2000 may be the first terminal device, a chip configured in the first terminal device, or a part or a component that may implement a communication function in the first terminal device.

Specifically, the processing unit 2020 is configured to determine a first sidelink candidate resource through monitoring. The transceiver unit 2010 is configured to receive at least one piece of resource indication information from a second terminal device, where each piece of resource indication information indicates one second sidelink candidate resource obtained by the second terminal device through monitoring. The processing unit 2020 is further configured to determine a sidelink sending resource based on the first sidelink candidate resource and based on at least one second sidelink candidate resource indicated by the at least one piece of resource indication information. The transceiver unit 2010 is further configured to send sidelink control information and data on the sidelink sending resource.

Optionally, the sidelink sending resource is a resource that is in the at least one second sidelink candidate resource and that overlaps the first sidelink candidate resource.

Optionally, the resource indication information indicates a start location of the second sidelink candidate resource in frequency domain and one or more of the following: an index of a slot corresponding to the second sidelink candidate resource; an offset of the slot corresponding to the second sidelink candidate resource with respect to a time reference point; and a reservation periodicity or a reservation time interval of the second sidelink candidate resource.

Optionally, an interval between a time point at which the transceiver unit 2010 receives the at least one piece of resource indication information and a first time point is less than a preset time interval. Alternatively, the at least one piece of resource indication information is resource indication information that is most recently received by the transceiver unit 2010 for one or more times prior to the first time point. The first time point is a time point at which the processing unit 2020 determines the first sidelink candidate resource or a time point at which the processing unit 2020 determines the sidelink sending resource.

Optionally, the transceiver unit 2010 is specifically configured to: send the sidelink control information and the data to the second terminal device on the sidelink sending resource.

In an implementation, the communication apparatus 2000 corresponds to the second terminal device in the method 1000. The communication apparatus 2000 may be the second terminal device, a chip configured in the second terminal device, or a part or a component that may implement a communication function in the second terminal device.

Specifically, the processing unit 2020 is configured to determine a second sidelink candidate resource through monitoring. The transceiver unit 2010 is configured to send resource indication information to a first terminal device, where the resource indication information indicates the second sidelink candidate resource.

Optionally, the transceiver unit 2010 is further configured to: receive sidelink control information and data from the first terminal device on a sidelink sending resource, where the sidelink sending resource is determined by the first terminal device based on the second sidelink candidate resource.

Optionally, the resource indication information indicates start location information of the second sidelink candidate resource in frequency domain and one or more of the following: an index of a slot corresponding to the second sidelink candidate resource; an offset of the slot corresponding to the second sidelink candidate resource with respect to a time reference point; and a reservation periodicity or a reservation time interval of the second sidelink candidate resource.

In another implementation, the communication apparatus 2000 corresponds to the first terminal device in the method 1300. The communication apparatus 2000 may be the first terminal device, a chip configured in the first terminal device, or a part or a component that may implement a communication function in the first terminal device.

Specifically, the processing unit 2020 is configured to determine a first sidelink candidate resource through monitoring. The transceiver unit 2010 is configured to receive at least one piece of resource indication information from a second terminal device on at least one first resource, where each piece of resource indication information indicates a reservation periodicity or a reservation time interval of a corresponding first resource. The processing unit 2020 is further configured to determine at least one second sidelink candidate resource based on the at least one piece of resource indication information and the at least one first resource. The processing unit 2020 is further configured to determine a sidelink sending resource based on the first sidelink candidate resource and based on the at least one second sidelink candidate resource. The transceiver unit 2010 is further configured to send sidelink control information and data on the sidelink sending resource.

Optionally, the resource indication information further indicates that the first resource may be used by the transceiver unit 2010 to perform sidelink sending.

Optionally, the sidelink sending resource is a resource that is in the at least one second sidelink candidate resource and that overlaps the first sidelink candidate resource.

Optionally, a time interval between a time point at which the transceiver unit 2010 receives the at least one piece of resource indication information and a first time point is less than a preset time interval. Alternatively, the at least one piece of resource indication information is resource indication information that is most recently received by the transceiver unit 2010 for one or more times prior to the first time point. The first time point is a time point at which the processing unit 2020 determines the first sidelink candidate resource or a time point at which the processing unit 2020 determines the sidelink sending resource.

Optionally, the transceiver unit 2010 is specifically configured to: send the sidelink control information and the data to the second terminal device on the sidelink sending resource.

In another implementation, the communication apparatus 2000 corresponds to the second terminal device in the method 1300. The communication apparatus 2000 may be the second terminal device, a chip configured in the second terminal device, or a part or a component that may implement a communication function in the second terminal device.

Specifically, the processing unit 2020 is configured to generate resource indication information. The transceiver unit 2010 is configured to send the resource indication information to a first terminal device on a first resource, where the resource indication information indicates a reservation periodicity or a reservation time interval of the first resource.

Optionally, the transceiver unit 2010 is further configured to: receive sidelink control information and data from the first terminal device on a sidelink sending resource, where the sidelink sending resource is determined by the first terminal device based on the first resource and the resource indication information.

Optionally, the resource indication information further indicates that the first resource is used by the first terminal device to perform sidelink sending.

It should be understood that a specific process in which the units perform the foregoing corresponding steps is described in detail in the foregoing method embodiments, and for brevity, details are not described herein.

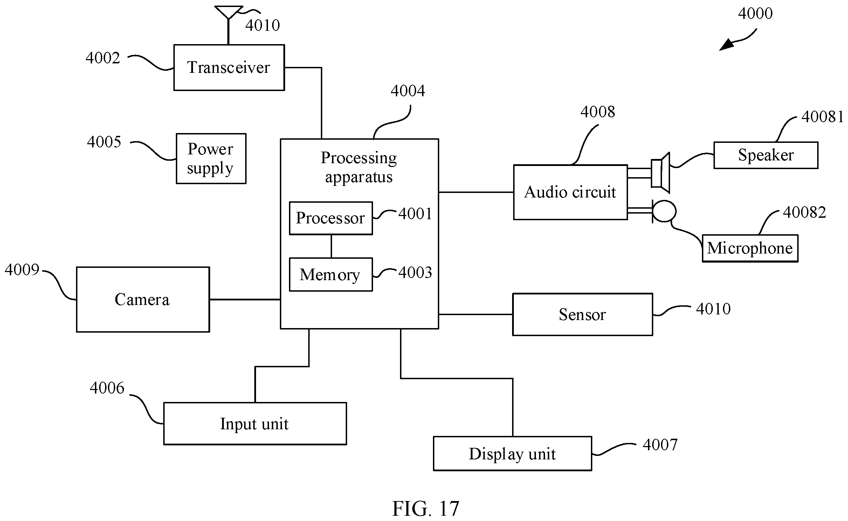

It should be further understood that the transceiver unit 2010 in the communication apparatus 2000 may correspond to a transceiver 3200 in a communication apparatus 3000 shown in FIG. 16 and a transceiver 4002 in a communication apparatus 4000 shown in FIG. 17. The processing unit 2020 in the communication apparatus 2000 may correspond to a processor 3100 in the communication apparatus 3000 shown in FIG. 16 and a processor 3001 in the communication apparatus 4000 shown in FIG. 17.

FIG. 16 is a schematic diagram of a structure of another communication apparatus 3000 according to an embodiment of this application. The communication apparatus 3000 may be a physical device, or may be a part or a component, for example, an integrated circuit or a chip, that may implement a communication function. The communication apparatus 3000 is the first terminal device in the method 1000 or 1300, or may be the second terminal device in the method 1000 or 1300.

Refer to FIG. 16. The communication apparatus 3000 includes one or more processors 3100. The processor 3100 may store execution instructions for performing the method in embodiments of this application. The processor 3100 may also be referred to as a processing circuit. Optionally, the processor 3100 may invoke an interface to implement receiving and sending functions. The interface may be a logical interface or a physical interface. This is not limited. For example, the interface may be a transceiver circuit or an interface circuit. The receiving and sending functions of the interface may be separated, or may be integrated together. For example, the interface may include a receiving circuit and a sending circuit, or an input circuit and an output circuit, or an input interface and an output interface, or a receiving interface and a sending interface. The foregoing interface may be configured to read and write code/data, or the foregoing interface may be configured to transmit or transfer a signal.

Optionally, the interface may be implemented through a transceiver. Optionally, the communication apparatus 3000 may further include a transceiver 3300. The transceiver 3300 may be referred to as a transceiver unit, a transceiver circuit, or the like, and is configured to implement receiving and sending functions.

Optionally, the communication apparatus 3000 may further include a memory 3200. A specific deployment location of the memory 3200 is not specifically limited in this embodiment of this application. The memory may be integrated into the processor, or may be independent of the processor. In a case in which a computer device does not include a memory, the computer device only needs to have a processing function, and the memory may be deployed at another location (for example, a cloud system).

The processor 3100, the memory 3200, and the transceiver 3300 communicate with each other through an internal connection path, to transfer a control signal and/or a data signal.

It may be understood that, although not shown, the communication apparatus 3000 may further include another module, for example, a battery.

Optionally, in some embodiments, the memory 3200 may store the execution instructions for performing the method in embodiments of this application. The processor 3100 may execute the instructions stored in the memory 3200, to complete, in combination with other hardware (for example, the transceiver 3300), the steps performed in the foregoing method. For a specific working process and beneficial effects, refer to the descriptions in the foregoing method embodiments.

The processor 3300 may be an integrated circuit chip and has a signal processing capability. In an implementation process, the steps of the method may be performed through a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly executed and accomplished by a hardware decoding processor, or may be executed and accomplished by a combination of hardware and software modules in the decoding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and a processor reads instructions in the memory and completes the steps in the foregoing methods in combination with hardware of the processor

It may be understood that the memory 3200 may be a volatile memory or a non-volatile memory, or may include both a volatile memory and a non-volatile memory. The non-volatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM and may serve as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

The communication apparatus 3000 may be a general-purpose computer device or a dedicated computer device. During specific implementation, the communication apparatus 3000 may be a desktop computer, a portable computer, a network server, a personal digital assistant (personal digital assistant, PDA), a mobile phone, a tablet computer, a wireless terminal device, a communication device, an embedded device, or a device having a structure similar to that in FIG. 16. A type of the communication apparatus 3000 is not limited in embodiments of this application.

FIG. 17 is a schematic diagram of a structure of a terminal device 4000 according to an embodiment of this application. The communication apparatus 4000 may be the first terminal device in the method 1000 or 1300, or may be the second terminal device in the method 1000 or 1300.

Refer to FIG. 17. The terminal device 4000 includes a processor 4001 and a transceiver 4002. Optionally, the terminal device 4000 may further include a memory 4003. The processor 4001, the transceiver 4002, and the memory 4003 may communicate with each other through an internal connection path, to transfer a control signal and/or a data signal. The memory 4003 is configured to store a computer program. The processor 4001 is configured to invoke the computer program from the memory 4003 and run the computer program, to control the transceiver 4002 to receive and send a signal.

The processor 4001 and the memory 4003 may be integrated into one processing apparatus 4004. The processor 4001 is configured to execute program code stored in the memory 4003, to implement the foregoing functions. It should be understood that the processing apparatus 4004 shown in the figure is merely an example. During specific implementation, the memory 4003 may alternatively be integrated into the processor 4001, or may be independent of the processor 4001. This is not limited in this application.

The terminal device 4000 may further include an antenna 4010, configured to send, by using a radio signal, data, sidelink control information, resource indication information, or the like that is output by the transceiver 4002.

Optionally, the terminal device 4000 may further include a power supply 4005, configured to supply power to various components or circuits in the terminal device.

In addition, to improve functions of the terminal device, the terminal device 4000 may further include one or more of an input unit 4006, a display unit 4007, an audio circuit 4008, a camera 4009, a sensor 4010, and the like, where the audio circuit may further include a speaker 40081, a microphone 40082, and the like.

It should be understood that the processing apparatus 4004 may be a chip. For example, the processing apparatus 4004 may be a field programmable gate array (field programmable gate array, FPGA), a general-purpose processor, a digital signal processor (digital signal processor, DSP), an application-specific integrated circuit (application-specific integrated circuit, ASIC), another programmable logic device, a discrete gate or transistor logic device, a discrete hardware component, a system on chip (system on chip, SoC), a central processing unit (central processor unit, CPU), a network processor (network processor, NP), a digital signal processing circuit (digital signal processor, DSP), a micro controller unit (micro controller unit, MCU), a programmable controller (programmable logic device, PLD), or another integrated chip. The processing apparatus 4004 may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly executed and accomplished by a hardware decoding processor, or may be executed and accomplished by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor

The memory 4003 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and may serve as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be noted that the memory of the systems and methods described in this specification includes but is not limited to these and any memory of another proper type.

This application further provides a computer program product. The computer program product includes computer program code. When the computer program code is run on a computer, the computer is enabled to perform the method performed by the first terminal device or the second terminal device in any one of the foregoing method embodiments.

This application further provides a computer-readable storage medium. The computer-readable storage medium stores program code. When the program code is run on a computer, the computer is enabled to perform the method performed by the first terminal device or the second terminal device in the foregoing method embodiments.

This application further provides a system, including the first terminal device and the second terminal device in the method 1000, or including the first terminal device and the second terminal device in the method 1300.

An embodiment of this application further provides a processing apparatus, including a processor and an interface. The processor is configured to perform the method performed by the first terminal device or the second terminal device in any one of the foregoing method embodiments.

All or a part of the foregoing embodiments may be implemented by software, hardware, firmware, or any combination thereof. When software is used to implement embodiments, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

Terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, an execution thread, a program, or a computer As illustrated by using figures, both a computing device and an application that runs on the computing device may be components. One or more components may reside within a process or an execution thread, and a component may be located on one computer or distributed between two or more computers. In addition, these components may be executed from various computer-readable media that store various data structures. For example, the components may communicate by using a local or remote process based on a signal having one or more data packets (for example, data from two components interacting with another component in a local system, in a distributed system, or across a network such as the Internet interacting with another system by using the signal).

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be understood that, in embodiments of this application, numbers "first", "second", and the like are merely used to distinguish between different objects, for example, to distinguish between different network devices, and do not constitute any limitation on the scope of embodiments of this application. Embodiments of this application are not limited thereto.

It should be further understood that, in this application, both "when" and "if" mean that a network element performs corresponding processing in an objective situation, but do not constitute any limitation on time, do not require the network element to perform a determining action during implementation, and do not mean other limitations either.

It should be further understood that, in this application, "at least one" means one or more, and " a plurality of' means two or more.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship between associated objects and represents that three relationships may exist. For example, A and/or B may represent the following three cases: Only A exists, both A and B exist, and only B exists. In addition, the character "/" in this specification usually indicates an "or" relationship between the associated objects.

Unless otherwise specified, an expression in this application similar to an expression "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, when more elements are included in the expression, a case to which the item is applicable may also be obtained according to the foregoing rule.

It may be understood that in embodiments of this application, the terminal device and/or the network device may perform all or a part of the steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application may be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. All or a part of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for indicating a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sidelink resource determining method, comprising:
determining, by a first terminal device, a first sidelink candidate resource through monitoring;
receiving, by the first terminal device, at least one piece of resource indication information from a second terminal device, wherein each piece of resource indication information indicates one second sidelink candidate resource obtained by the second terminal device through monitoring;
determining, by the first terminal device, a sidelink sending resource based on the first sidelink candidate resource and based on at least one second sidelink candidate resource indicated by the at least one piece of resource indication information; and
sending, by the first terminal device, sidelink control information and data on the sidelink sending resource.

2. The method according to claim 1, wherein the sidelink sending resource is a resource that is in the at least one second sidelink candidate resource and that overlaps the first sidelink candidate resource.

3. The method according to claim 1 or 2, wherein the resource indication information indicates a start location of the second sidelink candidate resource in frequency domain and one or more of the following:
an index of a slot corresponding to the second sidelink candidate resource;
an offset of the slot corresponding to the second sidelink candidate resource with respect to a time reference point; and
a reservation periodicity or a reservation time interval of the second sidelink candidate resource.

4. The method according to any one of claims 1 to 3, wherein an interval between a time point at which the first terminal device receives the at least one piece of resource indication information and a first time point is less than a preset time interval; or
the at least one piece of resource indication information is resource indication information that is most recently received by the first terminal device for one or more times prior to the first time point, wherein
the first time point is a time point at which the first terminal device determines the first sidelink candidate resource or a time point at which the first terminal device determines the sidelink sending resource.

5. The method according to any one of claims 1 to 4, wherein the sending, by the first terminal device, sidelink control information and data on the sidelink sending resource comprises:
sending, by the first terminal device, the sidelink control information and the data to the second terminal device on the sidelink sending resource.

6. A sidelink resource determining method, comprising:
determining, by a first terminal device, a first sidelink candidate resource through monitoring;
receiving, by the first terminal device, at least one piece of resource indication information from a second terminal device on at least one first resource, wherein each piece of resource indication information indicates a reservation periodicity or a reservation time interval of a corresponding first resource;
determining, by the first terminal device, at least one second sidelink candidate resource based on the at least one piece of resource indication information and the at least one first resource;
determining, by the first terminal device, a sidelink sending resource based on the first sidelink candidate resource and based on the at least one second sidelink candidate resource; and
sending, by the first terminal device, sidelink control information and data on the sidelink sending resource.

7. The method according to claim 6, wherein the resource indication information further indicates that the first resource may be used by the first terminal device to perform sidelink sending.

8. The method according to claim 6 or 7, wherein the sidelink sending resource is a resource that is in the at least one second sidelink candidate resource and that overlaps the first sidelink candidate resource.

9. The method according to any one of claims 6 to 8, wherein a time interval between a time point at which the first terminal device receives the at least one piece of resource indication information and a first time point is less than a preset time interval; or
the at least one piece of resource indication information is resource indication information that is most recently received by the first terminal device for one or more times prior to the first time point, wherein
the first time point is a time point at which the first terminal device determines the first sidelink candidate resource or a time point at which the first terminal device determines the sidelink sending resource.

10. The method according to any one of claims 6 to 9, wherein the sending, by the first terminal device, sidelink control information and data on the sidelink sending resource comprises:
sending, by the first terminal device, the sidelink control information and the data to the second terminal device on the sidelink sending resource.

11. A sidelink resource determining method, comprising:
determining, by a second terminal device, a second sidelink candidate resource through monitoring; and
sending, by the second terminal device, resource indication information to a first terminal device, wherein the resource indication information indicates the second sidelink candidate resource.

12. The method according to claim 11, wherein the method further comprises:
receiving, by the second terminal device, sidelink control information and data from the first terminal device on a sidelink sending resource, wherein the sidelink sending resource is determined by the first terminal device based on the second sidelink candidate resource.

13. The method according to claim 11 or 12, wherein the resource indication information indicates start location information of the second sidelink candidate resource in frequency domain and one or more of the following:
an index of a slot corresponding to the second sidelink candidate resource;
an offset of the slot corresponding to the second sidelink candidate resource with respect to a time reference point; and
a reservation periodicity or a reservation time interval of the second sidelink candidate resource.

14. A sidelink resource determining method, comprising:
generating, by a second terminal device, resource indication information; and
sending, by the second terminal device, the resource indication information to a first terminal device on a first resource, wherein the resource indication information indicates a reservation periodicity or a reservation time interval of the first resource.

15. The method according to claim 14, wherein the method further comprises:
receiving, by the second terminal device, sidelink control information and data from the first terminal device on a sidelink sending resource, wherein the sidelink sending resource is determined by the first terminal device based on the first resource and the resource indication information.

16. The method according to claim 14 or 15, wherein the resource indication information further indicates that the first resource is used by the first terminal device to perform sidelink sending.

17. A communication apparatus, comprising:
a processing unit, configured to determine a first sidelink candidate resource through monitoring; and
a transceiver unit, configured to receive at least one piece of resource indication information from a second terminal device, wherein each piece of resource indication information indicates one second sidelink candidate resource obtained by the second terminal device through monitoring, wherein
the processing unit is further configured to determine a sidelink sending resource based on the first sidelink candidate resource and based on at least one second sidelink candidate resource indicated by the at least one piece of resource indication information; and
the transceiver unit is further configured to send sidelink control information and data on the sidelink sending resource

18. The apparatus according to claim 17, wherein the sidelink sending resource is a resource that is in the at least one second sidelink candidate resource and that overlaps the first sidelink candidate resource.

19. The apparatus according to claim 17 or 18, wherein the resource indication information indicates a start location of the second sidelink candidate resource in frequency domain and one or more of the following:
an index of a slot corresponding to the second sidelink candidate resource;
an offset of the slot corresponding to the second sidelink candidate resource with respect to a time reference point; and
a reservation periodicity or a reservation time interval of the second sidelink candidate resource.

20. The apparatus according to any one of claims 17 to 19, wherein an interval between a time point at which the transceiver unit receives the at least one piece of resource indication information and a first time point is less than a preset time interval; or
the at least one piece of resource indication information is resource indication information that is most recently received by the transceiver unit for one or more times prior to the first time point, wherein
the first time point is a time point at which the processing unit determines the first sidelink candidate resource or a time point at which the processing unit determines the sidelink sending resource.

21. The apparatus according to any one of claims 17 to 20, wherein the transceiver unit is specifically configured to:
send the sidelink control information and the data to the second terminal device on the sidelink sending resource.

22. A communication apparatus, comprising:
a processing unit, configured to determine a first sidelink candidate resource through monitoring; and
a transceiver unit, configured to receive at least one piece of resource indication information from a second terminal device on at least one first resource, wherein each piece of resource indication information indicates a reservation periodicity or a reservation time interval of a corresponding first resource, wherein
the processing unit is further configured to determine at least one second sidelink candidate resource based on the at least one piece of resource indication information and the at least one first resource;
the processing unit is further configured to determine a sidelink sending resource based on the first sidelink candidate resource and based on the at least one second sidelink candidate resource; and
the transceiver unit is further configured to send sidelink control information and data on the sidelink sending resource

23. The apparatus according to claim 22, wherein the resource indication information further indicates that the first resource may be used by the transceiver unit to perform sidelink sending.

24. The apparatus according to claim 22 or 23, wherein the sidelink sending resource is a resource that is in the at least one second sidelink candidate resource and that overlaps the first sidelink candidate resource.

25. The apparatus according to any one of claims 22 to 24, wherein a time interval between a time point at which the transceiver unit receives the at least one piece of resource indication information and a first time point is less than a preset time interval; or
the at least one piece of resource indication information is resource indication information that is most recently received by the transceiver unit for one or more times prior to the first time point, wherein
the first time point is a time point at which the processing unit determines the first sidelink candidate resource or a time point at which the processing unit determines the sidelink sending resource.

26. The apparatus according to any one of claims 22 to 25, wherein the transceiver unit is specifically configured to:
send the sidelink control information and the data to the second terminal device on the sidelink sending resource.

27. A communication apparatus, comprising:
a processing unit, configured to determine a second sidelink candidate resource through monitoring; and
a transceiver unit, configured to send resource indication information to a first terminal device, wherein the resource indication information indicates the second sidelink candidate resource.

28. The apparatus according to claim 27, wherein the transceiver unit is further configured to:
receive sidelink control information and data from the first terminal device on a sidelink sending resource, wherein the sidelink sending resource is determined by the first terminal device based on the second sidelink candidate resource

29. The apparatus according to claim 27 or 28, wherein the resource indication information indicates start location information of the second sidelink candidate resource in frequency domain and one or more of the following:
an index of a slot corresponding to the second sidelink candidate resource;
an offset of the slot corresponding to the second sidelink candidate resource with respect to a time reference point; and
a reservation periodicity or a reservation time interval of the second sidelink candidate resource.

30. A communication apparatus, comprising:
a processing unit, configured to generate resource indication information; and
a transceiver unit, configured to send the resource indication information to a first terminal device on a first resource, wherein the resource indication information indicates a reservation periodicity or a reservation time interval of the first resource.

31. The apparatus according to claim 30, wherein the transceiver unit is further configured to:
receive sidelink control information and data from the first terminal device on a sidelink sending resource, wherein the sidelink sending resource is determined by the first terminal device based on the first resource and the resource indication information.

32. The apparatus according to claim 30 or 21, wherein the resource indication information further indicates that the first resource is used by the first terminal device to perform sidelink sending.

33. A communication apparatus, comprising a processor, wherein the processor is coupled to a memory, the memory is configured to store a program or instructions; and when the program or the instructions are executed by the processor, the apparatus is enabled to perform the method according to any one of claims 1 to 16.

34. A computer-readable storage medium, wherein the computer-readable storage medium stores a computer program or instructions; and when the computer program or the instructions are executed, the method according to any one of claims 1 to 16 is performed.

35. A communication system, comprising the communication apparatus according to any one of claims 17 to 21, and/or the communication apparatus according to any one of claims 27 to 29.

36. A communication system, comprising the communication apparatus according to any one of claims 22 to 26, and/or the communication apparatus according to any one of claims 30 to 32.
